# EUROPEAN PATENT APPLICATION

(11) **EP 4 818 873 A1**
(43) Date of publication of application: **07.10.2026**
(21) Application number: 25820413.0
(22) Date of filing: 11.02.2025
(51) Int. Cl.: G06F 3/04883, G06F 3/0486, G06F 3/0482, H04W 4/80, G06F 3/041

(54) **ELECTRONIC DEVICE AND CONTROL METHOD THEREOF**

(30) Priority: 03.06.2024 KR 20240072537
(71) Applicant: Samsung Electronics Co., Ltd., Suwon-si, Gyeonggi-do 16677 (KR)
(72) Inventor: LEE, Sangyoon, Suwon-si Gyeonggi-do 16677 (KR); KIM, Yoonyoung, Suwon-si Gyeonggi-do 16677 (KR); MOON, Joosun, Suwon-si Gyeonggi-do 16677 (KR); MIN, Yuri, Suwon-si Gyeonggi-do 16677 (KR); SON, Sunmin, Suwon-si Gyeonggi-do 16677 (KR); YUN, Soyoung, Suwon-si Gyeonggi-do 16677 (KR); JUNG, Jingun, Suwon-si Gyeonggi-do 16677 (KR); CHO, Eunjoo, Suwon-si Gyeonggi-do 16677 (KR); CHOI, Gippeum, Suwon-si Gyeonggi-do 16677 (KR)
(74) Representative: Appleyard Lees IP LLP
(86) International application number: PCT/KR2025/001985
(87) International publication number: WO 2025/254294

(57) **Abstract**

Provided is an electronic apparatus including: a memory storing a first touch type; a communication interface; a display; and at least one processor, wherein the at least one processor is configured to receive a first touch signal from a terminal device through the communication interface, control the display to display a first menu user interface (UI) indicating at least one function performable on the electronic apparatus if the first touch signal includes the first touch type, receive a second touch signal including a drag from the terminal device through the communication interface, and perform a function corresponding to a first drag direction among the at least one performable function through the first menu UI if the first drag direction is identified based on the second touch signal.

## Description

### [Technical Field]

The present disclosure relates to an electronic apparatus and a control method thereof, and more particularly, to an electronic apparatus that performs a specific function based on a touch signal received through a terminal device, and a control method thereof.

### [Background Art]

A dedicated remote control (remote control device) may be used to remotely control an electronic apparatus that displays content. However, there may be fewer functions that may be controlled if the dedicated remote control has few physical buttons. It may be inconvenient for a user to have to look at the dedicated remote control to find a position of a button for performing a specific function if the dedicated remote control has many physical buttons.

The electronic apparatus may be remotely controlled using a personal terminal device of the user without using the dedicated remote control. The user may input a control command through a virtual remote control user interface (UI) if the virtual remote control UI for controlling the electronic apparatus is provided on the personal terminal device. The virtual remote control UI may also be inconvenient because the user has to look at a screen where the virtual remote control UI is displayed due to a large number of buttons or an unfamiliar UI layout.

### [Disclosure]

### [Technical Solution]

Provided is an electronic apparatus that displays a menu user interface (UI) on an electronic apparatus and then performs a specific function based on a drag direction corresponding to a touch signal received from a terminal device, and a control method thereof.

According to an aspect of the disclosure, an electronic apparatus includes: memory storing one or more instructions and a first touch type; a communication interface; a display; and at least one processor configured to execute the one or more instructions, wherein the one or more instructions, when executed by the at least one processor, cause the electronic apparatus to: receive a first touch signal from a terminal device through the communication interface, based on the first touch signal including the first touch type, control the display to display a first menu user interface (UI) indicating at least one function performable on the electronic apparatus, receive a second touch signal including a drag from the terminal device through the communication interface, and based on a first drag direction being identified based on the second touch signal, perform a function corresponding to the first drag direction among the at least one function through the first menu UI.

The first touch type may include a double tap and hold or a long press, and the long press is a touch that exceeds a predetermined duration.

The first menu UI may include a UI indicating the at least one function, the memory may store a mapping table that maps the at least one function to a placement direction of the UI indicating the at least one function, and the one or more instructions, when executed by the at least one processor, may cause the electronic apparatus to: based on identifying the first drag direction, identify the placement direction that matches the first drag direction based on the mapping table, and perform a function corresponding to the identified placement direction.

The first menu UI may include a first UI indicating a first function and a second UI indicating a second function, and the mapping table may include: first mapping information that maps the first function to a first direction corresponding to a direction in which the first UI is placed relative to a center point of the first menu UI, and second mapping information that maps the second function to a second direction corresponding to a direction in which the second UI is placed relative to the center point of the first menu UI.

The one or more instructions, when executed by the at least one processor, may cause the electronic apparatus to: based on identifying the first drag direction, identify a direction that matches the first drag direction among the first direction and the second direction, and based on the first drag direction matching the first direction, perform the first function corresponding to the first direction.

The memory may store a second touch type, and the one or more instructions, when executed by the at least one processor, may cause the electronic apparatus to: receive a third touch signal from the terminal device through the communication interface, and based on the third touch signal including the second touch type, control the display to display a second menu UI indicating the at least one function, and wherein the second menu UI has a different appearance from the first menu UI.

The second touch type may include an edge swipe and hold, and the edge swipe may be a swipe input that moves from an edge region of the terminal device to its central region among all its regions.

The one or more instructions, when executed by the at least one processor, may cause the electronic apparatus to: receive a fourth touch signal including a drag from the terminal device through the communication interface, and based on the identifying a second drag direction based on the fourth touch signal, perform a function corresponding to the second drag direction among the at least one function which is performable through the second menu UI.

The memory may store a third touch type including a double tap, hold and drag, and the one or more instructions, when executed by the at least one processor, may cause the electronic apparatus to: receive a fifth touch signal from the terminal device through the communication interface, based on the fifth touch signal including the third touch type, identify a third drag direction based on the fifth touch signal, and perform a function corresponding to the third drag direction without displaying the first menu UI.

The one or more instructions, when executed by the at least one processor, may cause the electronic apparatus to: based on the function corresponding to the first drag direction corresponds to a predetermined mode, generate a control instruction for displaying a background screen of a color indicating the predetermined mode, transmit the control instruction to the terminal device through the communication interface, receive a sixth touch signal input from the terminal device through the communication interface while the background screen is displayed, and perform a function corresponding to the sixth touch signal.

According to an aspect of the disclosure, a method of controlling an electronic apparatus includes: receiving a first touch signal from a terminal device; based on the first touch signal including a first touch type, displaying a first menu user interface (UI) indicating at least one function performable on the electronic apparatus; receiving a second touch signal including a drag from the terminal device; and based on a first drag direction being identified based on the second touch signal, performing a function corresponding to the first drag direction among the at least one function through the first menu UI.

The first touch type may include a double tap and hold or a long press, and the long press is a touch that exceeds a predetermined duration.

The first menu UI may include a UI indicating the at least one function, a mapping table that maps the at least one function to a placement direction of the UI indicating the at least one function may be stored in a memory of the electronic apparatus, and the performing the function may include: based on the first drag direction being identified, identifying the placement direction that matches the first drag direction based on the mapping table, and performing a function corresponding to the identified placement direction.

The first menu UI may include a first UI indicating a first function and a second UI indicating a second function, and the mapping table may include: first mapping information that maps the first function to a first direction corresponding to a direction in which the first UI is placed relative to a center point of the first menu UI, and second mapping information that maps the second function to a second direction corresponding to a direction in which the second UI is placed relative to the center point of the first menu UI.

The performing the function may further include: based on identifying the first drag direction, identifying a direction that matches the first drag direction is identified among the first direction and the second direction, and based on the first drag direction matching the first direction, performing the first function corresponding to the first direction.

### [Description of Drawings]

The above and other aspects and features of certain embodiments of the present disclosure will be more apparent from the following description taken in conjunction with the accompanying drawings, in which:
FIG. 1 is a diagram for explaining an operation for controlling an electronic apparatus by using a terminal device according to one or more embodiments;
FIG. 2 is a block diagram showing the electronic apparatus according to an embodiment;
FIG. 3 is a block diagram for explaining a specific configuration of the electronic apparatus shown in FIG. 2 according to an embodiment;
FIG. 4 is a diagram for explaining a touch input screen displayed on the terminal device according to an embodiment;
FIG. 5 is a diagram for explaining a touch type according to an embodiment;
FIG. 6 is a diagram for explaining a predetermined touch input according to an embodiment;
FIG. 7 is a diagram for explaining a predetermined touch input according to an embodiment;
FIG. 8 is a diagram for explaining a screen displayed on the electronic apparatus based on the touch input according to an embodiment;
FIG. 9 is a diagram for explaining a four-direction first menu user interface (UI) according to an embodiment;
FIG. 10 is a diagram for explaining a six-direction first menu UI according to an embodiment;
FIG. 11 is a diagram for explaining an eight-direction first menu UI according to an embodiment;
FIG. 12 is a diagram for explaining a display position of the first menu UI according to an embodiment;
FIG. 13 is a diagram for explaining an operation for changing the first menu UI based on a touch position according to an embodiment;
FIG. 14 is a diagram for explaining an operation for displaying the first menu UI by using a first touch signal according to an embodiment;
FIG. 15 is a diagram for explaining an operation for displaying a second menu UI according to an embodiment;
FIG. 16 is a diagram for explaining a position at which the second menu UI is displayed according to an embodiment;
FIG. 17 is a diagram for explaining an operation for selecting one function among the second menu UIs according to an embodiment;
FIG. 18 is a diagram for explaining an edge swipe operation according to an embodiment;
FIG. 19 is a diagram for explaining an operation for displaying the second menu UI according to an embodiment;
FIG. 20 is a diagram for explaining an edge swipe operation according to an embodiment;
FIG. 21 is a diagram for explaining an operation for displaying the second menu UI by classifying three regions according to an embodiment;
FIG. 22 is a diagram for explaining an operation for performing a specific function without displaying the menu UI according to an embodiment;
FIG. 23 is a diagram for explaining an operation for receiving an additional touch input in a predetermined mode according to an embodiment;
FIG. 24 is a diagram for explaining an operation for receiving an additional touch input in a predetermined mode according to an embodiment;
FIG. 25 is a diagram for explaining a touch input screen for the predetermined mode according to an embodiment;
FIG. 26 is a diagram for explaining an operation for determining a color of the touch input screen for the predetermined mode according to an embodiment;
FIG. 27 is a diagram for explaining an end event of the predetermined mode according to an embodiment.
FIG. 28 is a diagram for explaining a sub-menu UI corresponding to the first menu UI according to an embodiment;
FIG. 29 is a diagram for explaining a sub-menu UI corresponding to the second menu UI according to an embodiment;
FIG. 30 is a diagram for explaining an operation for displaying the sub-menu UI according to an embodiment;
FIG. 31 is a diagram for explaining an operation for receiving a general touch signal according to an embodiment;
FIG. 32 is a diagram for explaining an operation for displaying a different menu UI based on content according to an embodiment;
FIG. 33 is a diagram for explaining an operation for receiving the touch signal by considering a direction of the terminal device according to an embodiment;
FIG. 34 is a diagram for explaining an operation for displaying a seventh menu UI corresponding to the first menu UI also on the terminal device according to an embodiment;
FIG. 35 is a diagram for explaining an operation for displaying the seventh menu UI corresponding to the first menu UI also on the terminal device according to an embodiment;
FIG. 36 is a diagram for explaining a menu UI having a different form from the first menu UI according to an embodiment;
FIG. 37 is a diagram for explaining a menu UI having a different form from the second menu UI according to an embodiment;
FIG. 38 is a diagram for explaining an operation for displaying the first menu UI in a situation where terminal devices of a plurality of users are connected to the electronic apparatus according to an embodiment;
FIG. 39 is a diagram for explaining an operation for receiving the touch input on a lock screen of the terminal device according to an embodiment;
FIG. 40 is a diagram for explaining an operation for moving the first menu UI according to an embodiment;
FIG. 41 is a diagram for explaining an operation for receiving the touch input through various terminal devices according to an embodiment;
FIG. 42 is a diagram for explaining an operation for guiding a touch method for controlling the electronic apparatus according to an embodiment;
FIG. 43 is a diagram for explaining a situation where a signal of a remote control device is input while the electronic apparatus is controlled by the terminal device according to an embodiment;
FIG. 44 is a diagram for explaining an operation for executing a touch input mode of the terminal device if the terminal device approaches the electronic apparatus according to an embodiment; and
FIG. 45 is a diagram for explaining a control method of an electronic apparatus according to an embodiment.

### [Mode for Invention]

Hereinafter, the present disclosure is described in detail with reference to the accompanying drawings.

Terms used in embodiments of the present disclosure are currently widely used general terms that are selected as much as possible in consideration of their functions in the present disclosure, and may be changed based on the intentions of those skilled in the art, cases in the art, the emergence of a new technique, or the like. In addition, in a specific case, terms arbitrarily chosen by an applicant may exist. In this case, the meaning of such terms will be mentioned in detail in a corresponding description portion of the present disclosure. Therefore, the terms used in the present disclosure need to be defined on the basis of the meanings of the terms and the contents throughout the present disclosure rather than simple names of the terms.

In the specification, an expression "have", "may have", "include", "may include", or the like, indicates the existence of a corresponding feature (for example, a numerical value, a function, an operation or a component such as a part), and does not exclude the presence of an additional feature.

As used herein, the expressions "at least one of a, b or c" and "at least one of a, b and c" indicate "only a," "only b," "only c," "both a and b," "both a and c," "both b and c," and "all of a, b, and c."

Expressions "first", "second", or the like used in the present disclosure may indicate various components regardless of the sequence or importance of the components. These expressions are used only in order to distinguish one component and another component from each other, and do not limit the corresponding components.

If any component (for example, a first component) is described as being "(operatively or communicatively) coupled with/to or connected to" another component (for example, a second component), it should be understood that any component may be directly coupled to another component or may be coupled to another component through yet another component (for example, a third component).

A term of a singular number includes its plural number unless explicitly interpreted otherwise in context. It should be understood that a term "include", "formed of", "comprises" or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/ors" may be integrated in at least one module and implemented by at least one processor except for a "module" or an "~er/or" that needs to be implemented by specific hardware.

In the specification, a term "user" may refer to a person using an electronic apparatus or an apparatus (e.g., artificial intelligence electronic apparatus) using the electronic apparatus.

Hereinafter, an embodiment of the present disclosure is described in more detail with reference to the accompanying drawings.

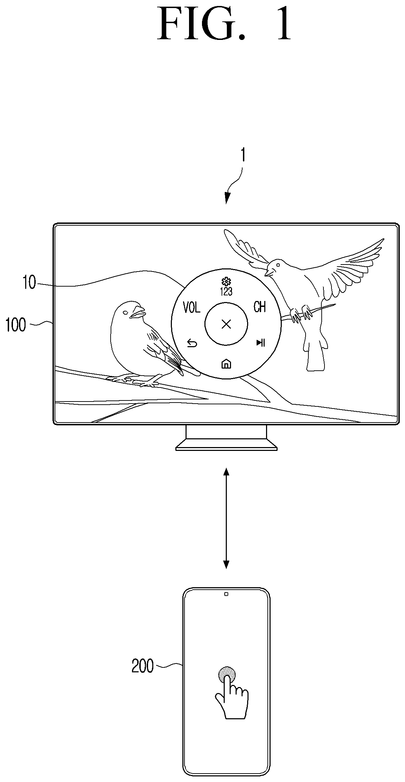

FIG. 1 is a diagram for explaining an operation for controlling the electronic apparatus by using a terminal device 200 according to an embodiment.

Referring to FIG. 1, an electronic apparatus 100 may indicate a display device. The electronic apparatus 100 may be a device that provides (or displays) content. The electronic apparatus 100 may be connected to the terminal device 200 by a wireless communication method. The electronic apparatus 100 may be controlled by the terminal device 200. For example, the electronic apparatus 100 may be a television (TV), a monitor, a computer, or a projector.

The terminal device 200 may be a device connected to the electronic apparatus 100. The terminal device 200 may be a personal terminal device of the user. For example, the terminal device 200 may be a smartphone, a tablet, a smart watch, or a smart ring.

The electronic apparatus 100 may be controlled by the terminal device 200. The user may control the electronic apparatus 100 by using the terminal device 200. The terminal device 200 may be a device that receives a user touch input. The terminal device 200 may remotely control the electronic apparatus 100.

The terminal device 200 may not be a dedicated device for controlling the electronic apparatus 100. The terminal device 200 may perform a touch recognition mode (first mode) for receiving the touch input for controlling the electronic apparatus 100. The terminal device 200 may perform a general mode (second mode) for performing a function of the terminal device 200 itself without being related to the control of the terminal device 200.

The terminal device 200 may perform the touch recognition mode to control the electronic apparatus 100 by using the touch signal received by the terminal device 200. The general mode may be a mode that recognizes an input touch signal as an input for controlling the terminal device 200 itself. The touch recognition mode may be a mode that recognizes the input touch signal as the input for controlling the electronic apparatus 100 rather than the terminal device 200.

The touch signal received from the terminal device 200 may be transmitted to the electronic apparatus 100 if the touch recognition mode is performed on the terminal device 200. The electronic apparatus 100 may perform a specific operation (function) based on the touch signal received from the terminal device 200.

The touch recognition mode may be performed (or executed) based on the user input.

For example, the electronic apparatus 100 may transmit a control instruction (or control command) for performing the touch recognition mode to the terminal device 200 if the electronic apparatus 100 is switched from a power-off state to a power-on state.

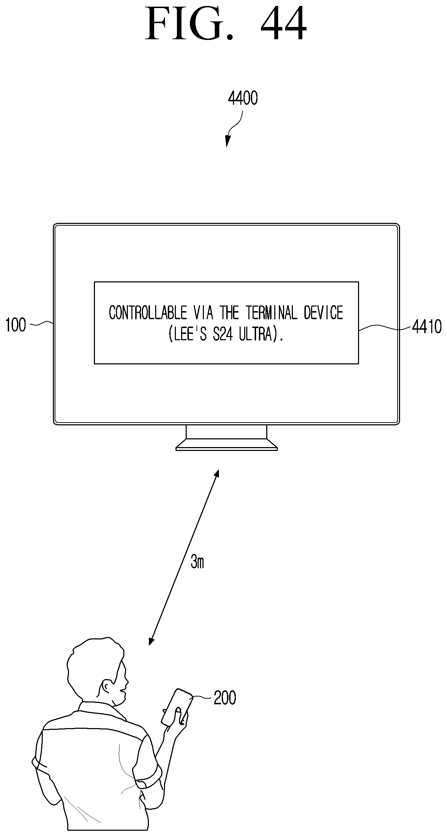

For example, the electronic apparatus 100 may measure a distance between the electronic apparatus 100 and the terminal device 200. If the measured distance is a threshold distance or less, the electronic apparatus 100 may transmit the control instruction to the terminal device 200 to perform the touch recognition mode. A description thereof is provided with reference to FIG. 44.

For example, the terminal device 200 may start the touch recognition mode if a specific application on the terminal device 200 is executed based on the user input.

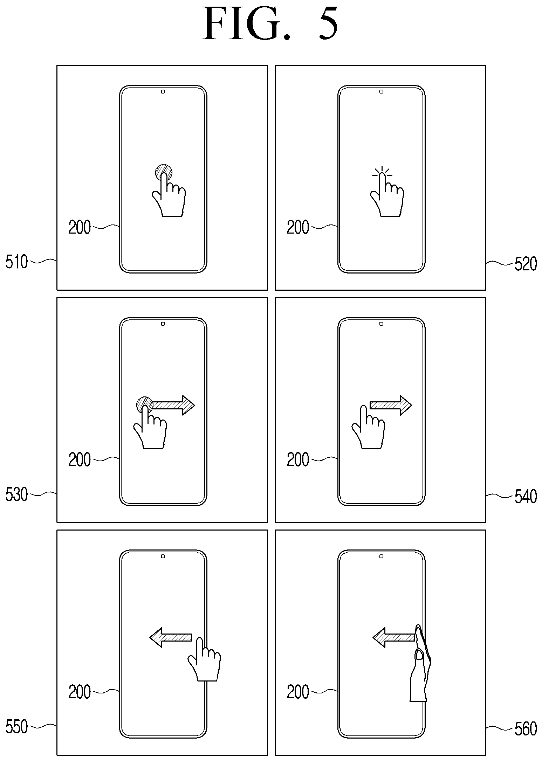

The terminal device 200 may acquire a user touch signal. A detailed description of the touch signal is provided with reference to FIG. 5. The terminal device 200 may transmit the acquired touch signal to the electronic apparatus 100.

The electronic apparatus 100 may perform the specific function based on a first event. The electronic apparatus 100 may display a first menu user interface (UI) 10. The first menu UI 10 may be a UI indicating a quick menu function.

The quick menu function may display a service that performs the specific function based on a predetermined shortcut instruction (or shortcut input) without a separate setting screen.

The first menu UI 10 may include a UI corresponding to at least one function capable of being performed based on the shortcut instruction.

Referring to FIG. 1, the first menu UI 10 may include a UI indicating six functions. The electronic apparatus 100 may display the first menu UI 10 that indicates the six functions. The electronic apparatus 100 may perform a function corresponding to one of a plurality of UIs displayed on the first menu UI 10 based on the touch signal received from the terminal device 200.

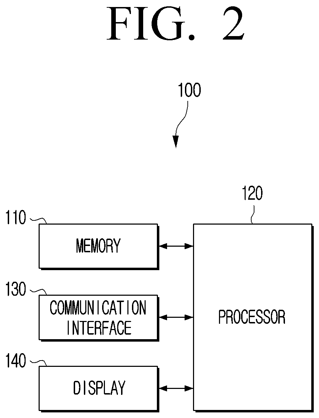

FIG. 2 is a block diagram showing the electronic apparatus 100 according to an embodiment.

The electronic apparatus 100 may include various devices including a display. The electronic apparatus 100 may be an electronic whiteboard, a television (TV), desktop personal computer (PC), a laptop, a smartphone, a tablet PC, a server, or the like. The above-described example is only an example to describe the electronic apparatus, and is not necessarily limited to the above-described device.

At least one processor 120 may perform overall control operations of the electronic apparatus 100. At least one processor 120 may perform a function of controlling overall operations of the electronic apparatus 100.

A memory 110 may store at least one touch type. At least one touch type may include a predetermined touch. The memory 110 may store at least one mapping table. The mapping table may indicate a table that maps a function to a placement direction.

A communication interface 130 may connect the electronic apparatus 100 to the terminal device 200. The communication interface 130 may connect the electronic apparatus 100 to an external device. The external device may include a remote control device, a server, or the like. The communication interface 130 may include a plurality of communication modules. The communication interface 130 may use a different communication module for each device connected to the electronic apparatus 100. For example, the electronic apparatus 100 may be connected to the terminal device 200 by using a first communication module and connected to the external device by using a second communication module. The first communication module and the second communication module may use different communication methods.

A display 140 may display a screen provided by the electronic apparatus 100. The display 140 may display a screen corresponding to the content. The display 140 may display the first menu UI 10 or a second menu UI 20.

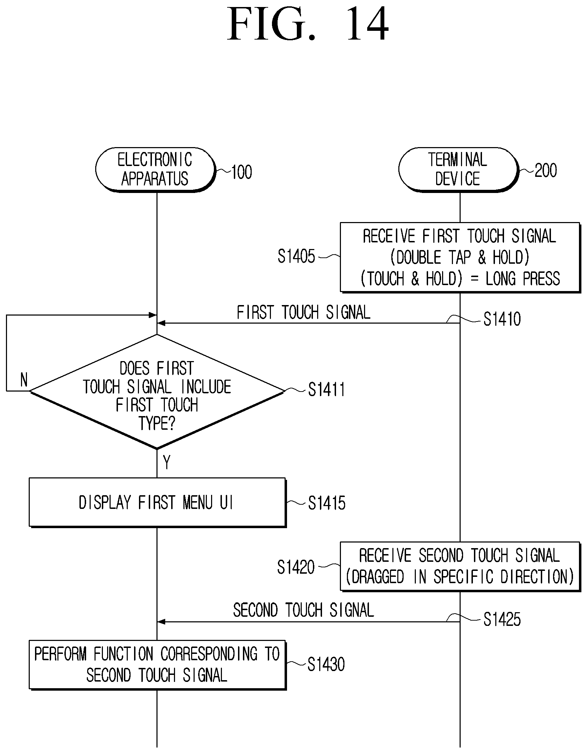

At least one processor 120 may receive a first touch signal from the terminal device through the communication interface 130, control the display 140 to display the first menu UI indicating at least one performable function on the electronic apparatus 100 if the first touch signal includes a first touch type, receive a second touch signal including a drag from the terminal device through the communication interface 130, and perform a function corresponding to a first drag direction among at least one performable function through the first menu UI 10 if the first drag direction is identified based on the second touch signal. An operation for performing the specific function by receiving the first touch signal and the second touch signal is described with reference to FIG. 14.

At least one processor 120 may receive the first touch signal from the terminal device 200 operated in the touch recognition mode.

At least one processor 120 may identify whether the first touch signal includes the first touch type. The first touch type may be the predetermined touch type.

The touch signal may include various information related to the touch. The touch signal may include touch coordinate values over time, and identification information of the device from which the touch signal is sensed. The touch signal may include coordinate values (or position values) indicating where the touch is received on the device into which the touch signal is input.

The first touch type may include a double tap and hold or a long press, where a "long press" may include a press that exceeds a predetermined duration.

For example, the first touch type may be the double tap and hold.

For example, the first touch type may be the long press.

For example, the first touch type may include all of the double tap, the hold, and the long press. If the first touch type includes the plurality of touch signals, an operation that the first touch signal includes the first touch type may indicate that the first touch signal matches one of the plurality of touch signals included in the first touch type. The first touch signal may not necessarily include a mode touch signal defined as the first touch type.

At least one processor 120 may identify whether the first touch signal includes the first touch type. At least one processor 120 may identify whether the first touch signal corresponds to the first touch type. At least one processor 120 may analyze the touch coordinate values included in the first touch signal to determine whether the values match the predetermined first touch type. At least one processor 120 may analyze the first touch signal to determine whether the first touch type is identified.

At least one processor 120 may determine that the first event occurs if the first touch type is identified in the first touch signal. At least one processor 120 may display the first menu UI 10 if the first event is identified.

The first menu UI 10 may include the UI indicating at least one function. The first menu UI 10 may be a UI having a circular shape.

For example, the first menu UI 10 may include one UI for performing one function.

For example, the first menu UI 10 may include one UI for performing a plurality of functions. One UI may include sub-menu UIs indicating the plurality of functions. If one UI is selected, at least one processor 120 may display (or provide) the sub-menu UIs indicating the plurality of functions.

For example, the first menu UI 10 may include a plurality of UIs for performing at least one function. The UI included in the first menu UI 10 may be a UI used to perform the specific function. The UI included in the first menu UI 10 may be described as an icon or an image. The first menu UI 10 may include at least one icon or at least one image. The UI included in the first menu UI 10 may be described as a button UI.

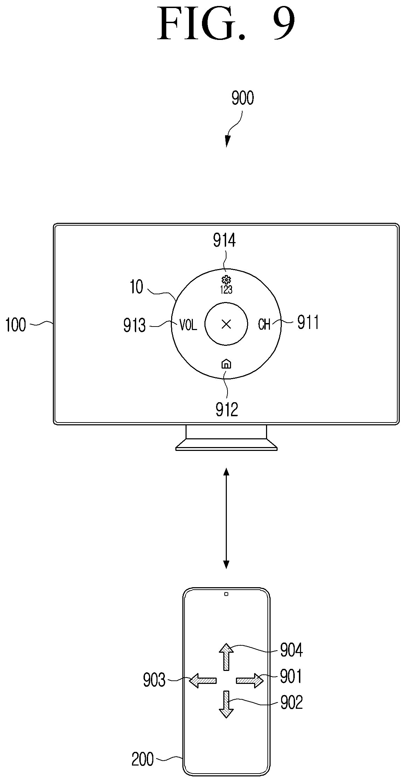

The four-direction, six-direction, and eight-direction first menu UIs 10 are described with reference to FIGS. 9 to 11.

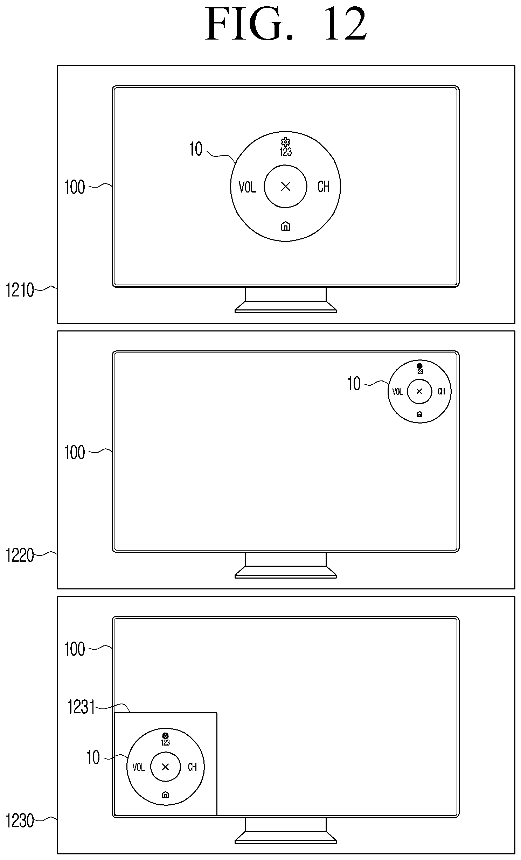

A description of a position where the first menu UI 10 is displayed is described with reference to FIG. 12.

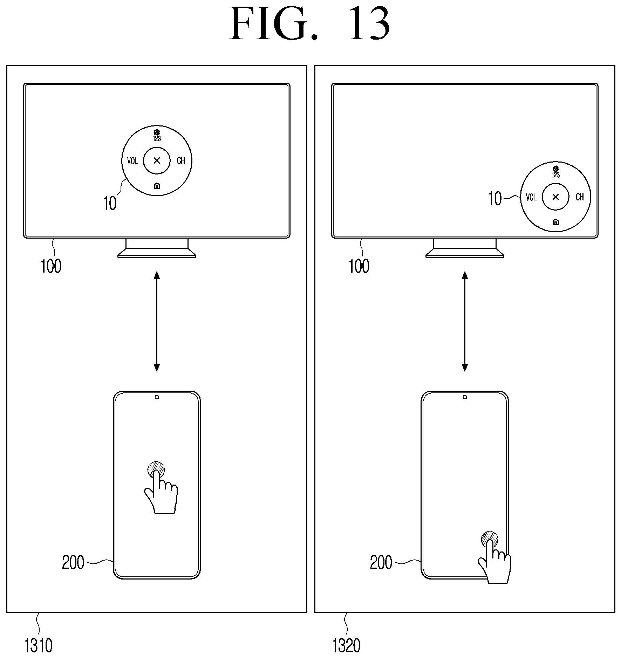

An embodiment for determining the position of the first menu UI 10 in response to a touch position identified by the terminal device 200 is described with reference to FIG. 13.

The electronic apparatus 100 may store, in the memory 110, the mapping table that maps at least one function to a placement direction of the UI indicating at least one function.

The first menu UI 10 may include the UI indicating at least one function. The placement direction of the UI may be determined based on a placement structure of the UI included in the first menu UI 10.

The placement direction of the UI indicating at least one function may be determined based on where the UI is placed.

At least one processor 120 may identify the placement direction that matches the first drag direction of the second touch signal based on the mapping table if the first drag direction is identified based on the second touch signal, and perform a function corresponding to the identified placement direction.

The first menu UI 10 may include a first UI indicating a first function and a second UI indicating a second function.

The mapping table may include first mapping information that maps the first function to a first direction indicating a direction in which the first UI is placed relative to the center point of the first menu UI 10.

The mapping table may include second mapping information that maps the second function to a second direction indicating a direction in which the second UI is placed relative to the center point of the first menu UI 10.

At least one processor 120 may identify a direction that matches the first drag direction among the first direction and the second direction included in the mapping table if the first drag direction is identified based on the second touch signal. At least one processor 120 may perform the first function corresponding to the first direction if the first drag direction matches the first direction.

At least one processor 120 may identify whether the second touch signal includes a drag signal if the second touch signal is received after displaying the first menu UI 10 based on the first touch signal.

At least one processor 120 may identify the first drag direction of the drag signal included in the second touch signal if the drag signal is included in the second touch signal. At least one processor 120 may identify whether the placement direction that matches the first drag direction is present in the mapping table.

At least one processor 120 may perform the function corresponding to the identified placement direction if the placement direction corresponding to the first drag direction is identified from the mapping table.

For example, the four-direction first menu UI 10 may resemble the UI shown in exemplary diagram 900 of FIG. 9. A first UI 911 indicating the first function may indicate the first direction (rightward) based on the center point of the first menu UI 10. A second UI 912 indicating the second function may indicate the second direction (downward) based on the center point of the first menu UI 10. A third UI 913 indicating a third function may indicate a third direction (leftward) based on the center point of the first menu UI 10. A fourth UI 914 indicating a fourth function may indicate a fourth direction (upward) based on the center point of the first menu UI 10.

For example, the mapping table may include the first mapping information that maps the first function to the first direction (rightward), the second mapping information that maps the second function to the second direction (downward), third mapping information that maps the third function to the third direction (leftward), and fourth mapping information that maps the fourth function to the fourth direction (upward).

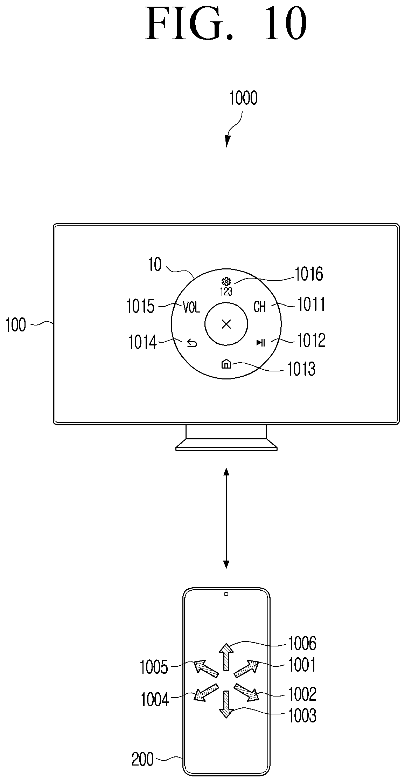

The mapping table includes information on the placement position of the UI, and the mapping table that needs to be applied may also be changed if the placement position of the UI is changed. Therefore, the mapping table applied in FIG. 9 and the mapping table applied in FIG. 10 may be different from each other.

The electronic apparatus 100 may store different mapping tables based on a type of the first menu UI 10. The electronic apparatus 100 may store different mapping tables based on the number of UIs included in the first menu UI 10.

The electronic apparatus 100 may store the mapping table corresponding to the displayed first menu UI 10 in the memory 110. At least one processor 120 may acquire the mapping table corresponding to the electronic apparatus 100 if the second touch signal is received from the terminal device 200 after displaying the first menu UI 10. At least one processor 120 may perform the specific function based on the second touch signal and the mapping table. At least one processor 120 may perform the function corresponding to the second touch signal.

At least one processor 120 may identify whether the second touch signal includes the drag. At least one processor 120 may identify the first drag direction based on the second touch signal if the second touch signal includes the drag. At least one processor 120 may identify the direction that matches the first drag direction among the plurality of directions stored in the mapping table. At least one processor 120 may perform a function corresponding to the identified direction (matched direction).

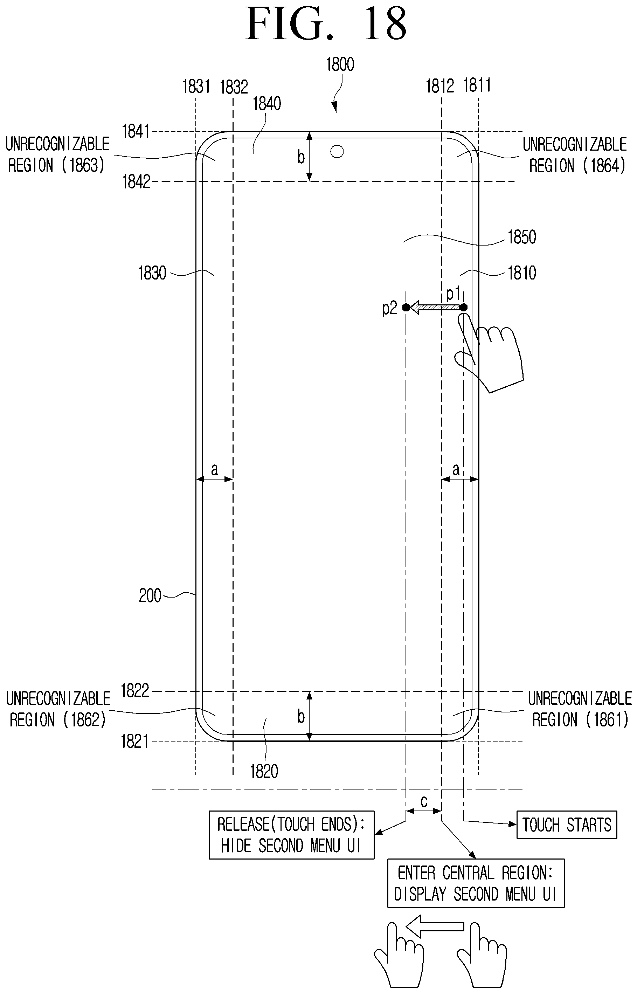

The electronic apparatus 100 may store a second touch type in the memory 110. The second touch type may include an edge swipe and hold. The edge swipe may be a swipe input that moves from an edge region of the terminal device to its central region among all its regions. A description of the edge swipe is provided with reference to FIG. 18.

At least one processor 120 may receive a third touch signal from the terminal device through the communication interface 130. At least one processor 120 may control the display 140 to display the second menu UI 20 indicating at least one function performable on the electronic apparatus 100 if the third touch signal includes the second touch type.

The second menu UI 20 may be a UI having a different appearance from the first menu UI 10. The second menu UI 20 may be a semicircular UI and the first menu UI 10 may be a circular UI.

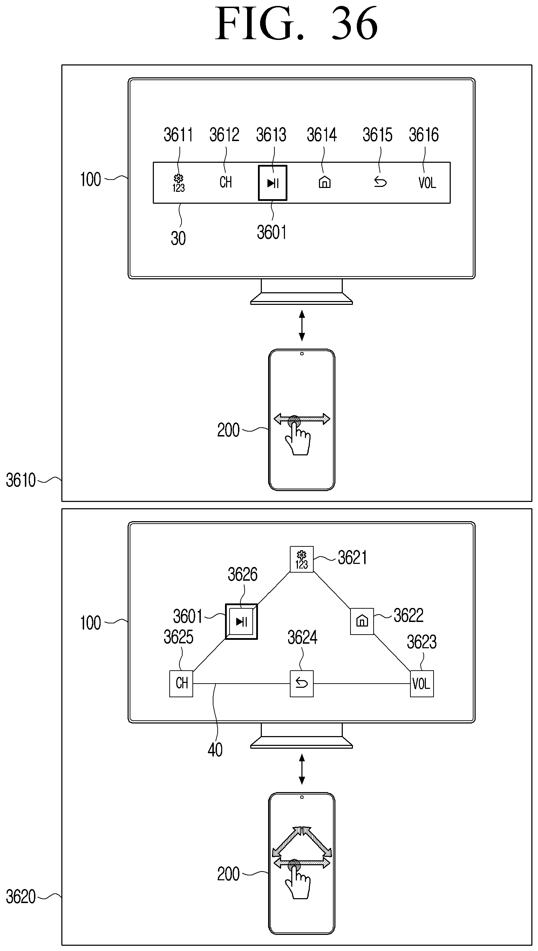

A menu of a different form than the first menu UI 10 may be displayed. For the UI displayed instead of the first menu UI 10, a third menu UI 30 in the form of a line (or bar type) and a fourth menu UI 40 in the form of a triangle are described with reference to FIG. 36.

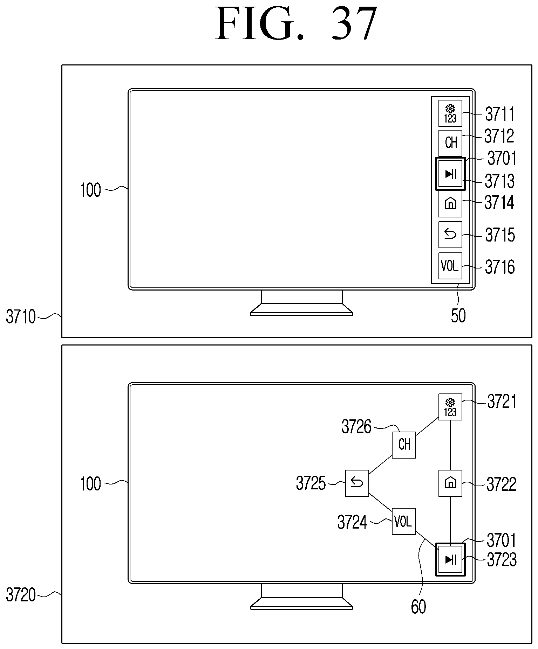

A menu of a different form than the second menu UI 20 may be displayed. For the UI displayed instead of the second menu UI 20, a fifth menu UI 50 in the form of the line (or bar type) and a sixth menu UI 60 in the form of the triangle are described with reference to FIG. 37.

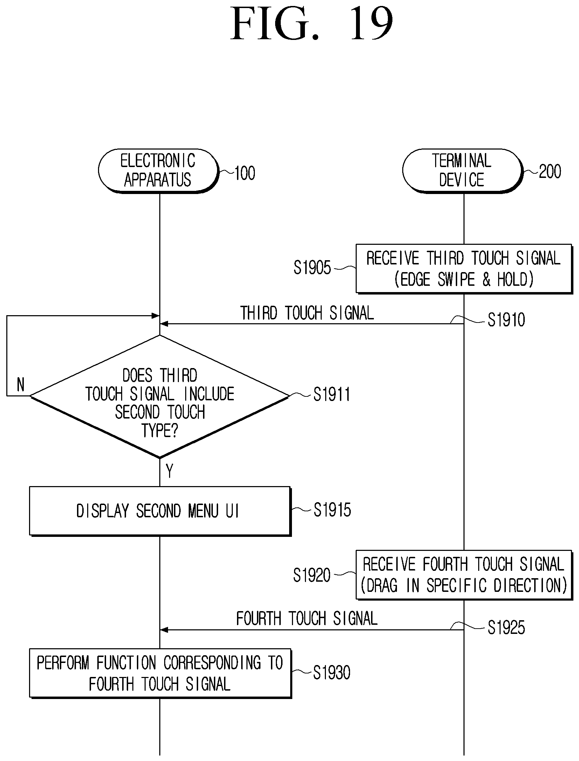

At least one processor 120 may receive a fourth touch signal including a drag from the terminal device 200 through the communication interface 130. At least one processor 120 may perform a function corresponding to a second drag direction among at least one performable function through the second menu UI if the second drag direction is identified based on the fourth touch signal. The operation that uses the third touch signal and the fourth touch signal is described with reference to FIG. 19.

The electronic apparatus 100 may store, in the memory 110, a third touch type including the double tap, hold and drag. At least one processor 120 may receive a fifth touch signal from the terminal device through the communication interface 130. At least one processor 120 may identify a third drag direction based on the fifth touch signal if the fifth touch signal includes the third touch type. At least one processor 120 may perform a function corresponding to the third drag direction without displaying the first menu UI 10.

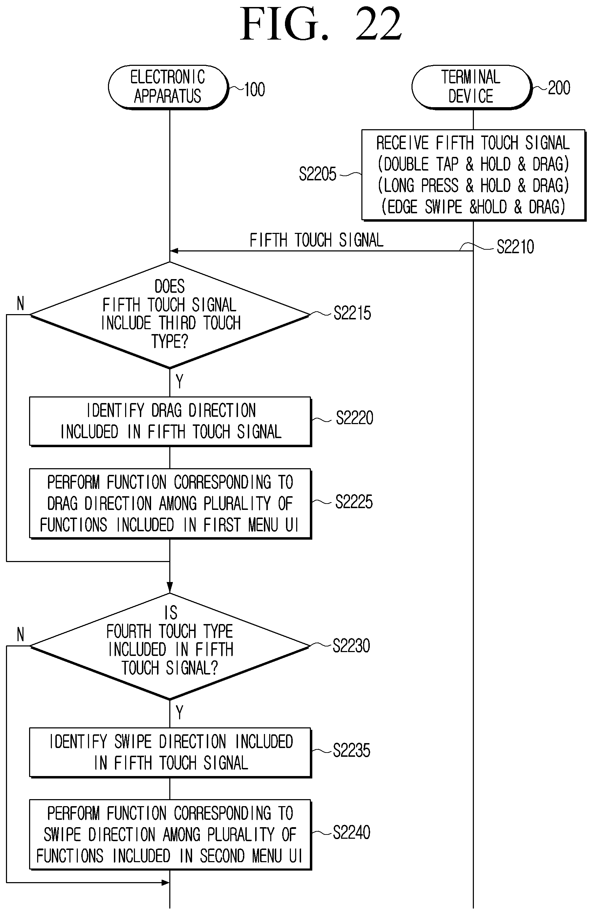

Not displaying the first menu UI 10 may indicate performance of the specific function without displaying a separate UI. For example, a user familiar with the quick menu function may input the touch signal to the terminal device 200 without looking at the first menu UI 10. A description of the third touch type is provided with reference to FIG. 22.

At least one processor 120 may generate the control instruction for displaying a background screen of a color indicating, or corresponding to, a predetermined mode (background screen of the terminal device 200) if the function corresponding to the first drag direction corresponds to the predetermined mode. At least one processor 120 may transmit the control instruction to the terminal device 200 through the communication interface 130. At least one processor 120 may receive a sixth touch signal input from the terminal device 200 through the communication interface 130 while the background screen of the color indicating the predetermined mode is displayed on the terminal device 200. At least one processor 120 may perform a function corresponding to the sixth touch signal.

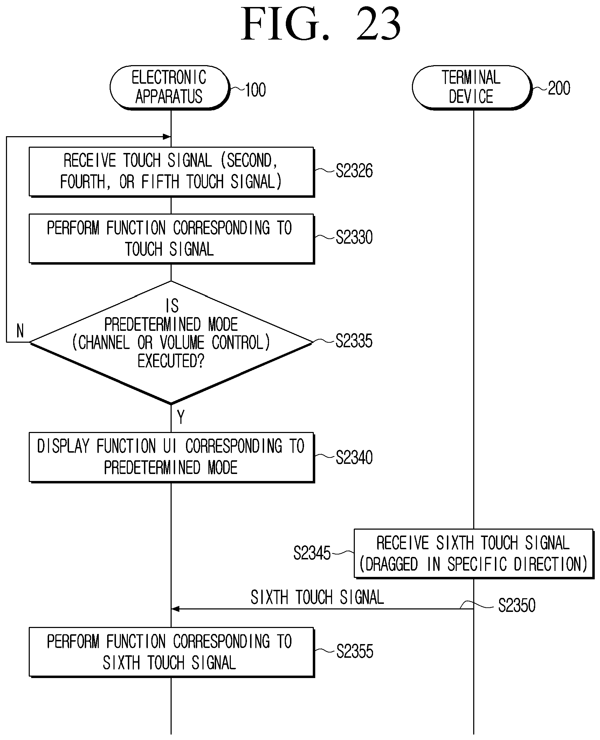

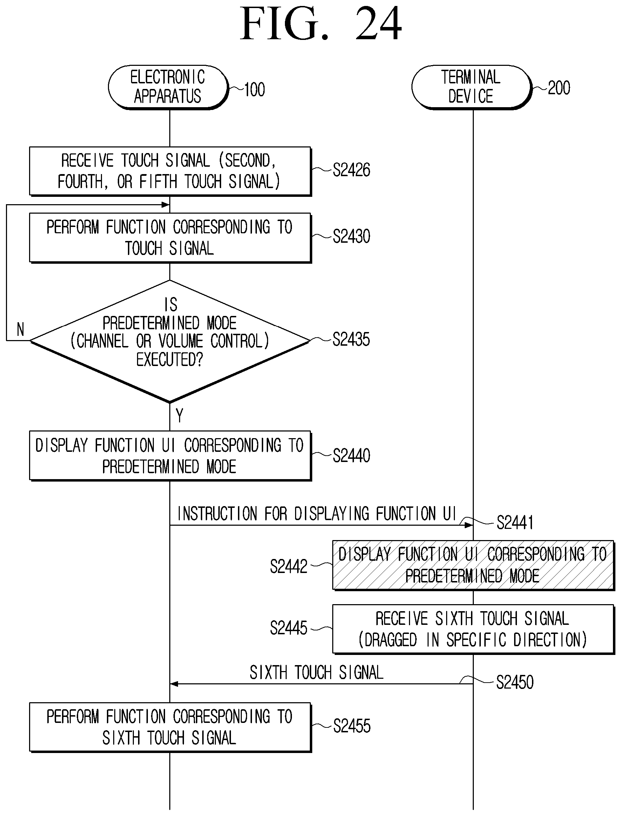

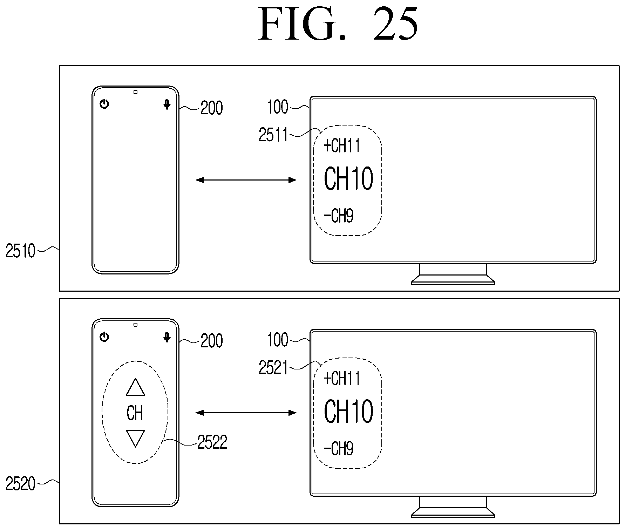

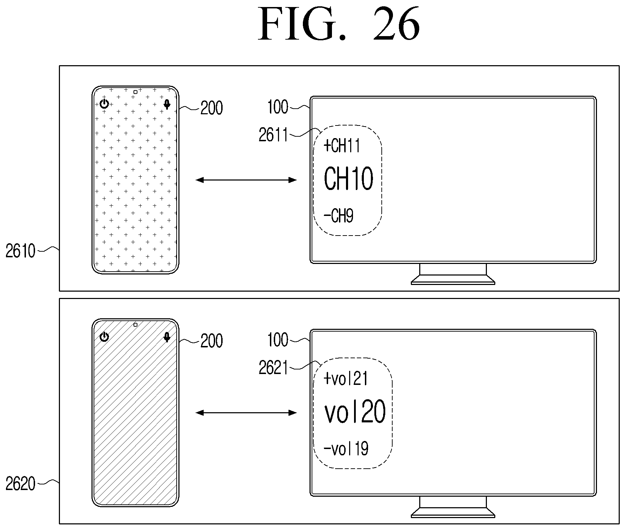

The predetermined mode may include at least one of a channel control mode or a volume control mode. A detailed description of the sixth touch signal is provided with reference to FIGS. 23 and 24. A description of the predetermined mode is provided with reference to FIG. 25. An operation for determining the color of the background screen based on the predetermined mode is described with reference to FIG. 26.

The electronic apparatus 100 may analyze the user touch input through the terminal device 200. The electronic apparatus 100 may perform the specific function based on the analyzed touch input of the user. The user may transmit the touch input to the electronic apparatus 100 through the terminal device 200. The user may manipulate the terminal device 200 while looking at the electronic apparatus 100. The touch input that is input by the user may be a simple input (e.g., tap, double tap, drag, swipe). Therefore, the user may control the electronic apparatus 100 while looking at the first menu UI 10 displayed on the electronic apparatus 100 even if the user does not direct his or her gaze toward the terminal device 200.

According to an embodiment, the terminal device 200 may provide a haptic function related to the first menu UI 10. The haptic function may include a function to output vibration to the terminal device 200.

The electronic apparatus 100 may generate a first control instruction for performing the haptic function a first number of times (e.g., once) through the terminal device 200 if the first menu UI 10 is displayed on the display 140 of the electronic apparatus 100. The electronic apparatus 100 may transmit the first control instruction to the terminal device 200. The terminal device 200 may perform the first control instruction received from the electronic apparatus 100. The terminal device 200 may perform the haptic function the first number of times (e.g., once) based on the first control instruction.

According to an embodiment, the terminal device 200 may perform the haptic function on its own without receiving the first control instruction. The terminal device 200 may perform the haptic function the first number of times on its own if the terminal device 200 receives the touch signal for displaying the first menu UI 10 on the display 140 of the electronic apparatus 100. The terminal device 200 may analyze the input (or received) touch signal and acquire an analysis result. The terminal device 200 may determine, based on the analysis result, whether the touch signal includes the first touch type indicating whether the touch signal is the signal for displaying the first menu UI 10 on the electronic apparatus 100. The terminal device 200 may perform the haptic function the first number of times if the touch signal includes the first touch type.

The electronic apparatus 100 may generate a second control instruction for performing the haptic function a second number of times (e.g., three times) if the first menu UI 10 is not displayed on the display 140. The electronic apparatus 100 may transmit the second control instruction to the terminal device 200. The terminal device 200 may perform the haptic function the second number of times (e.g., three times) based on the second control instruction. The first number of times may be different from the second number of times.

According to an embodiment, the terminal device 200 may perform the haptic function on its own without receiving the second control instruction. The terminal device 200 may perform the haptic function the second number of times on its own if the terminal device 200 receives the touch signal not for displaying the first menu UI 10 on the display 140 of the electronic apparatus 100. The terminal device 200 may analyze the input (or received) touch signal and acquire an analysis result. The terminal device 200 may determine, based on the analysis result, whether the touch signal includes the first touch type indicating whether the touch signal is the signal for displaying the first menu UI 10 on the electronic apparatus 100. The terminal device 200 may perform the haptic function the second number of times if the touch signal does not include the first touch type.

According to an embodiment, an operation performed on the electronic apparatus 100 may also be performed on the terminal device 200. Unlike an embodiment described above where the terminal device 200 transmits the touch signal as it is to the electronic apparatus 100, the terminal device 200 may directly analyze the touch signal. The terminal device 200 may analyze the touch signal and transmit the analysis result to the electronic apparatus 100. The analysis result may include the control instruction for performing the specific function. The terminal device 200 may determine whether a predetermined touch signal is received. The terminal device 200 may transmit the control instruction corresponding to the predetermined touch signal to the electronic apparatus 100 if the predetermined touch signal is received. The electronic apparatus 100 may perform the specific function based on the control instruction.

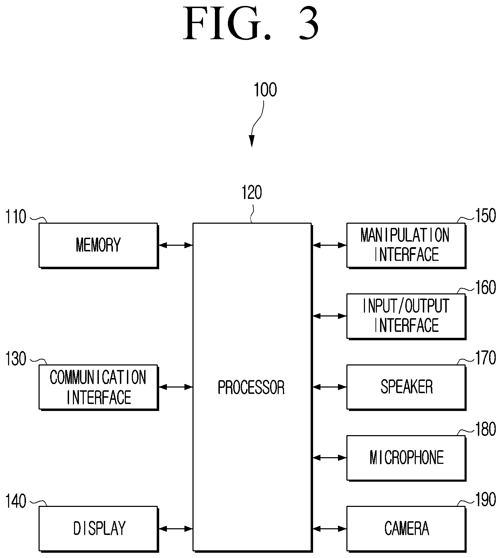

FIG. 3 is a block diagram for explaining a specific configuration of the electronic apparatus shown in FIG. 2 according to an embodiment. FIG. 3 is a block diagram for explaining the specific configuration of the electronic apparatus 100 shown in FIG. 2.

Referring to FIG. 3, the electronic apparatus 100 may include at least one of the memory 110, at least one processor 120, the communication interface 130, the display 140, a manipulation interface 150, an input/output interface 160, a speaker 170, a microphone 180, or a camera 190.

The memory 110 may be implemented as an internal memory such as a read-only memory (ROM, e.g., electrically erasable programmable read-only memory (EEPROM)) or a random access memory (RAM), included in at least one processor 120, or as a memory separate from at least one processor 120. The memory 110 may be implemented in the form of a memory embedded in the electronic apparatus 100, or may be implemented in the form of a memory detachable from the electronic apparatus 100, based on a data storing purpose. For example, data for driving the electronic apparatus 100 may be stored in the memory embedded in the electronic apparatus 100, and data for the extension function of the electronic apparatus 100 may be stored in the memory detachable from the electronic apparatus 100.

The memory embedded in the electronic apparatus 100 may be implemented as at least one of a volatile memory (e.g., dynamic RAM (DRAM), static RAM (SRAM) or synchronous dynamic RAM (SDRAM)), a non-volatile memory (e.g., one time programmable ROM (OTPROM), programmable ROM (PROM), erasable and programmable ROM (EPROM), electrically erasable and programmable ROM (EEPROM)), a mask ROM, a flash ROM, a flash memory (e.g., NAND flash or NOR flash), a hard drive or a solid state drive (SSD); and the memory detachable from the electronic apparatus 100 may be implemented as a memory card (e.g., compact flash (CF), secure digital (SD), micro secure digital (Micro-SD), mini secure digital (mini-SD), extreme digital (xD), or multi-media card (MMC)), an external memory (e.g., USB memory) which may be connected to a universal serial bus (USB) port, or the like.

The memory 110 can store at least one instruction. At least one processor 120 may perform various operations based on the instruction stored in the memory 110.

At least one processor 120 may be implemented as a digital signal processor (DSP), a microprocessor, or a time controller (TCON), which processes a digital signal. However, at least one processor 120 is not limited thereto, and may include one or more of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by these terms. At least one processor 120 may be implemented as a system-on-chip (SoC) or a large scale integration (LSI), in which a processing algorithm is embedded, or may be implemented in the form of a field programmable gate array (FPGA). At least one processor 120 may perform various functions by executing computer executable instructions stored in the memory.

The communication interface 130 may be a component that communicates with the various types of external devices by using various types of communication methods. The communication interface 130 may include a wireless communication module or a wired communication module. Each communication module may be implemented in the form of at least one hardware chip.

The wireless communication module may be a module communicating with the external device in a wireless manner. For example, the wireless communication module may include at least one module among a Wi-Fi module, a Bluetooth module, an infrared communication module, or another communication module.

The Wi-Fi module and the Bluetooth module may respectively perform the communication in a Wi-Fi manner and a Bluetooth manner. In case of using the Wi-Fi module or the Bluetooth module, it is possible to first transmit and receive various connection information such as a service set identifier (SSID) or a session key, establish the communication by using this connection information, and then transmit and receive various information.

The infrared communication module may perform the communication based on infrared data association (IrDA) technology for transmitting data in a short distance in the wireless manner by using an infrared ray between visible light and millimeter waves.

In addition to the above-described communication manners, another communication module may include at least one communication chip performing the communication on the basis of various wireless communication standards such as zigbee, third generation (3G), third generation partnership project (3GPP), long term evolution (LTE), LTE advanced (LTE-A), fourth generation (4G), and fifth generation (5G).

The wired communication module may be a module communicating with the external device in a wired manner. For example, the wired communication module may include at least one of a local area network (LAN) module, an Ethernet module, a pair cable, a coaxial cable, an optical fiber cable, or an ultra wide-band (UWB) module.

According to the one or more embodiments, the communication interface 130 may use the same communication module (e.g., Wi-Fi module) to communicate with the external device and the external server, such as the remote control device.

According to the various embodiments, the communication interface 130 may use different communication modules to communicate with the external device and the external server, such as the remote control device. For example, the communication interface 130 may use at least one of the Ethernet module or the Wi-Fi module to communicate with the external server, and may use the Bluetooth module to communicate with the external device such as the remote control device. However, this case is only an embodiment, and the communication interface 130 may use at least one communication module among various communication modules in case of communicating with the plurality of external devices or external servers.

The display 140 may be implemented as various types of displays such as a liquid crystal display (LCD), an organic light emitting diode (OLED) display, or a plasma display panel (PDP). The display 140 may include a driving circuit, a backlight unit, and the like, which may be implemented in a form such as an amorphous silicon thin film transistor (a-si TFT), a low temperature poly silicon (LTPS) TFT, or an organic TFT (OTFT). The display 140 may be implemented as a touch screen coupled with a touch sensor, a flexible display, a three-dimensional (3D) display, or the like. The display 140 according to an embodiment of the present disclosure may include not only a display panel outputting an image, but also a bezel housing the display panel. In particular, the bezel may include the touch sensor for detecting user interaction according to an embodiment of the present disclosure.

The manipulation interface 150 may be implemented as a device such as a button, a touch pad, a mouse, or a keyboard, or may be implemented as a touch screen capable of also performing a manipulation input function together with the above-described display function. The button may be any of various types of buttons such as a mechanical button, a touch pad, or a wheel, which is placed in any region, such as the front surface portion, side surface portion, or rear surface portion of a body appearance of the electronic apparatus 100.

The input/output interface 160 may be any of a high definition multimedia interface (HDMI), a mobile high-definition link (MHL), a universal serial bus (USB), a display port (DP), a thunderbolt, a video graphics array (VGA) port, a red-green-blue (RGB) port, a D-subminiature (D-SUB), or a digital visual interface (DVI). The input/output interface 160 may input/output at least one of an audio signal or a video signal. According to an embodiment, the input/output interface 160 may include a port for inputting and outputting only the audio signal and a port for inputting and outputting only the video signal as its separate ports, or may be implemented as a single port for inputting and outputting both the audio signal and the video signal. The electronic apparatus 100 may transmit at least one of the audio signal or the video signal to the external device (e.g., external display device or external speaker) through the input/output interface 160. The output port included in the input/output interface 160 may be connected to the external device, and the electronic apparatus 100 may transmit at least one of the audio signal or the video signal to the external device through the output port.

The input/output interface 160 may be connected with the communication interface. The input/output interface 160 may transmit information received from an external machine to the communication interface, or transmit information received through the communication interface to the external machine.

The speaker 170 may be a component that outputs not only various audio data but also various notification sounds, voice messages, or the like.

The microphone 180 is a component that receives a user voice or other sounds to convert the same into the audio data. The microphone 180 may receive the user voice while activated. For example, the microphone 180 may be integrated with the electronic apparatus 100 in the upper, front, or side direction of the electronic apparatus 100. The microphone 180 may include various components such as a microphone collecting the user voice in an analog form, an amplifier circuit amplifying the collected user voice, an analog to digital (A/D) conversion circuit sampling the amplified user voice and converting the same into the digital signal, a filter circuit removing a noise component from the converted digital signal, and the like.

The camera 190 may be a component that captures a subject and generates a captured image. The captured image may include both moving images and still images. The camera 190 may acquire an image of at least one external machine, and may be implemented as a camera, a lens, an infrared sensor, or the like.

The camera 190 may include the lens and an image sensor. Types of lenses may include a general-purpose lens, a wide-angle lens, or a zoom lens, and may be determined based on the type, feature, usage environment, and the like of the electronic apparatus 100. The image sensor may use a complementary metal oxide semiconductor (CMOS), a charge coupled device (CCD), or the like.

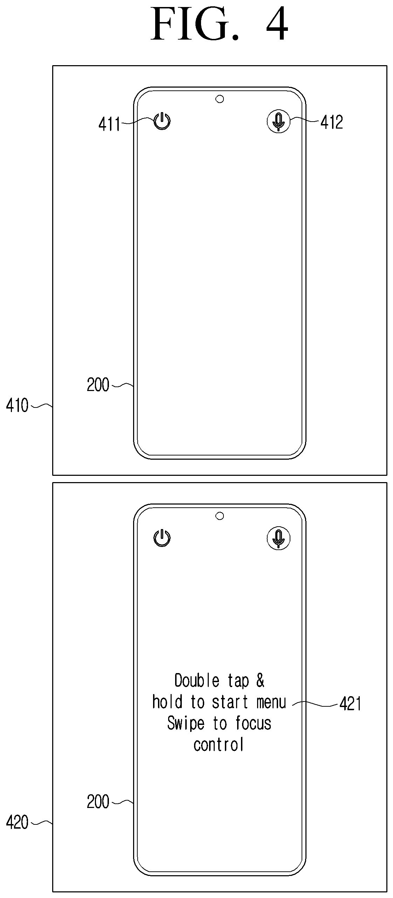

FIG. 4 is a diagram for explaining a touch input screen displayed on the terminal device 200 according to an embodiment.

The terminal device 200 for controlling the electronic apparatus 100 may execute the touch input mode. The touch input mode may indicate a mode in which the terminal device 200 receives the user touch signal and transmits the received touch signal to the electronic apparatus 100.

The terminal device 200 may display the touch input screen if the touch input mode is executed. The touch input screen may represent a screen for receiving the user touch signal. The terminal device 200 may receive the user touch input (or user touch signal) while the touch input screen is displayed.

Referring to exemplary diagram 410 of FIG. 4, the terminal device 200 may display the touch input screen. The touch input screen may include at least one of a UI 411 for controlling power of the electronic apparatus 100 or a UI 412 corresponding to a function for inputting the voice to the electronic apparatus 100. The touch input screen may include a background image of a predetermined color (e.g., black).

Referring to exemplary diagram 420 of FIG. 4, the terminal device 200 may display the touch input screen. The touch input screen may include a guide UI 421 for controlling the electronic apparatus 100. The guide UI 421 may be a UI for describing the predetermined touch type for controlling the electronic apparatus 100. The guide UI 421 may be a UI for describing the predetermined touch type for executing the quick menu function performable on the electronic apparatus 100. The guide UI 421 may include at least one of text information or image information describing the predetermined touch type for displaying the menu UI.

The touch type may indicate a specific touch input or a plurality of touch inputs. The plurality of touch inputs may include an order. Receiving a first touch and a second touch in order may be described as one touch type.

FIG. 5 is a diagram for explaining the touch type according to an embodiment.

Referring to exemplary diagram 510 of FIG. 5, the terminal device 200 may receive a long-press touch input.

Referring to exemplary diagram 520 of FIG. 5, the terminal device 200 may receive a tap touch input.

Referring to exemplary diagram 530 of FIG. 5, the terminal device 200 may receive a drag touch input.

Referring to exemplary diagram 540 of FIG. 5, the terminal device 200 may receive a swipe touch input. A difference between the drag touch input and the swipe touch input may be the presence or absence of a holding operation at a touch start time point. As used herein, a drag touch input may be an input that moves a touch point after holding the touch point for a threshold time or more from a touch input start point. As used herein, a swipe touch input may be an input that moves the touch point after holding the touch point for less than the threshold time from the touch input start point.

The "holding" may indicate an act of maintaining the specific touch input. For example, the tap and hold may indicate an act of inputting a tap and then continuously maintaining a finger in contact with the touch screen. The tap and hold may also be described as a long press.

Referring to exemplary diagram 550 of FIG. 5, the terminal device 200 may receive an edge swipe touch input. An edge swipe may include a touch input where the swipe starts in the edge region of the terminal device 200. A detailed description related to the edge region is provided with reference to FIGS. 18 to 21.

Referring to exemplary diagram 560 of FIG. 5, the terminal device 200 may receive an edge swipe motion input. A motion input may include an input recognized as a user motion other than the user touch. The touch input may be sensed by the touch sensor. However, the motion input may also be sensed by a motion sensor. For example, the motion sensor may include a camera that may recognize the motion.

While this example describes only the edge swipe in relation to the motion. However, the edge swipe may be equally applied to exemplary diagrams 510 to 560 of FIG. 5 along with various other touch input methods.

As used herein, the terms "touch input" and "touch signal" may be described as having the same meaning.

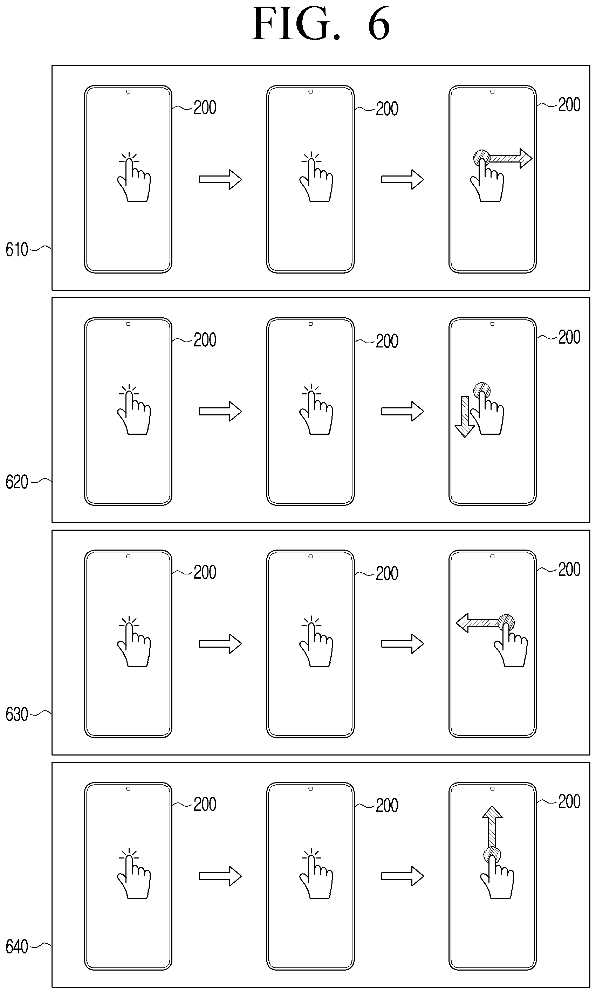

FIG. 6 is a diagram for explaining the predetermined touch type according to an embodiment.

The electronic apparatus 100 may display the first menu UI 10 if the first event is identified. The first event may indicate an event that identifies the first touch type.

According to an embodiment, the first event may indicate an event that acquires a double tap touch signal. The electronic apparatus 100 may display the first menu UI 10 if the double tap touch signal is received. The electronic apparatus 100 may receive a drag touch signal after displaying the first menu UI 10. The electronic apparatus 100 may perform (or execute) a function corresponding to the drag touch signal among the plurality of functions included in the first menu UI.

The terminal device 200 may consecutively receive the touch input of the tap, the tap, and the drag. The tap and the tap may be described as the double tap if the taps are input consecutively. The terminal device 200 may receive the double tap and the drag. The drag direction may be changed based on a user setting.

Referring to exemplary diagram 610 of FIG. 6, the terminal device 200 may receive the touch signal including the double tap and a rightward drag. The terminal device 200 may transmit the received touch signal to the electronic apparatus 100. The electronic apparatus 100 may display the first menu UI 10 based on the double tap. The electronic apparatus 100 may perform a function corresponding to a rightward area on the first menu UI based on the rightward drag.

Referring to exemplary diagram 620 of FIG. 6, the terminal device 200 may receive the touch signal including the double tap and a downward drag. The terminal device 200 may transmit the received touch signal to the electronic apparatus 100. The electronic apparatus 100 may display the first menu UI 10 based on the double tap. The electronic apparatus 100 may perform a function corresponding to downward on the first menu UI based on the downward drag.

Referring to exemplary diagram 630 of FIG. 6, the terminal device 200 may receive the touch signal including the double tap and a leftward drag. The terminal device 200 may transmit the received touch signal to the electronic apparatus 100. The electronic apparatus 100 may display the first menu UI 10 based on the double tap. The electronic apparatus 100 may perform a function corresponding to a leftward area on the first menu UI based on the leftward drag.

Referring to exemplary diagram 640 of FIG. 6, the terminal device 200 may receive the touch signal including the double tap and an upward drag. The terminal device 200 may transmit the received touch signal to the electronic apparatus 100. The electronic apparatus 100 may display the first menu UI 10 based on the double tap. The electronic apparatus 100 may perform a function corresponding to upward on the first menu UI based on the upward drag.

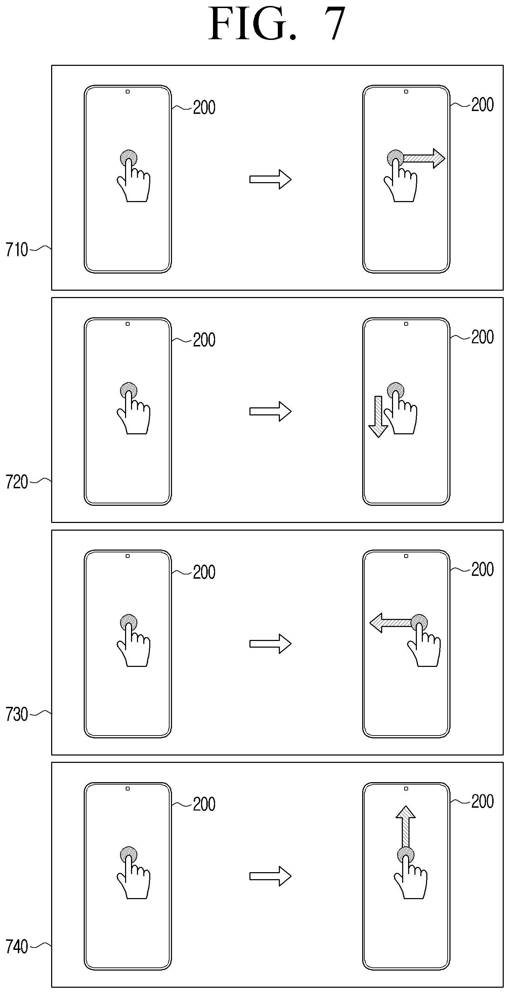

FIG. 7 is a diagram for explaining the predetermined touch type according to an embodiment.

The electronic apparatus 100 may display the first menu UI 10 if the first event is identified. According to an embodiment, the first event may indicate an event that identifies the first touch type. The first touch type may be a long press touch. The electronic apparatus 100 may display the first menu UI 10 if a long press touch signal is received. The electronic apparatus 100 may receive the drag touch signal after displaying the first menu UI 10. The electronic apparatus 100 may perform (or execute) the function corresponding to the drag touch signal among the plurality of functions included in the first menu UI.

The terminal device 200 may receive the long press and the drag. The drag direction may be changed based on the user setting.

Referring to exemplary diagram 710 of FIG. 7, the terminal device 200 may receive the touch signal including the long press and the rightward drag. The terminal device 200 may transmit the received touch signal to the electronic apparatus 100. The electronic apparatus 100 may display the first menu UI 10 based on the long press. The electronic apparatus 100 may perform the function corresponding to a rightward area on the first menu UI based on the rightward drag.

Referring to exemplary diagram 720 of FIG. 7, the terminal device 200 may receive the touch signal including the long press and the downward drag. The terminal device 200 may transmit the received touch signal to the electronic apparatus 100. The electronic apparatus 100 may display the first menu UI 10 based on the long press. The electronic apparatus 100 may perform the function corresponding to downward on the first menu UI based on the downward drag.

Referring to exemplary diagram 730 of FIG. 7, the terminal device 200 may receive the touch signal including the long press and the leftward drag. The terminal device 200 may transmit the received touch signal to the electronic apparatus 100. The electronic apparatus 100 may display the first menu UI 10 based on the long press. The electronic apparatus 100 may perform a function corresponding to a leftward area on the first menu UI based on the leftward drag.

Referring to exemplary diagram 740 of FIG. 7, the terminal device 200 may receive the touch signal including the long press and the upward drag. The terminal device 200 may transmit the received touch signal to the electronic apparatus 100. The electronic apparatus 100 may display the first menu UI 10 based on the long press. The electronic apparatus 100 may perform a function corresponding to upward on the first menu UI based on the upward drag.

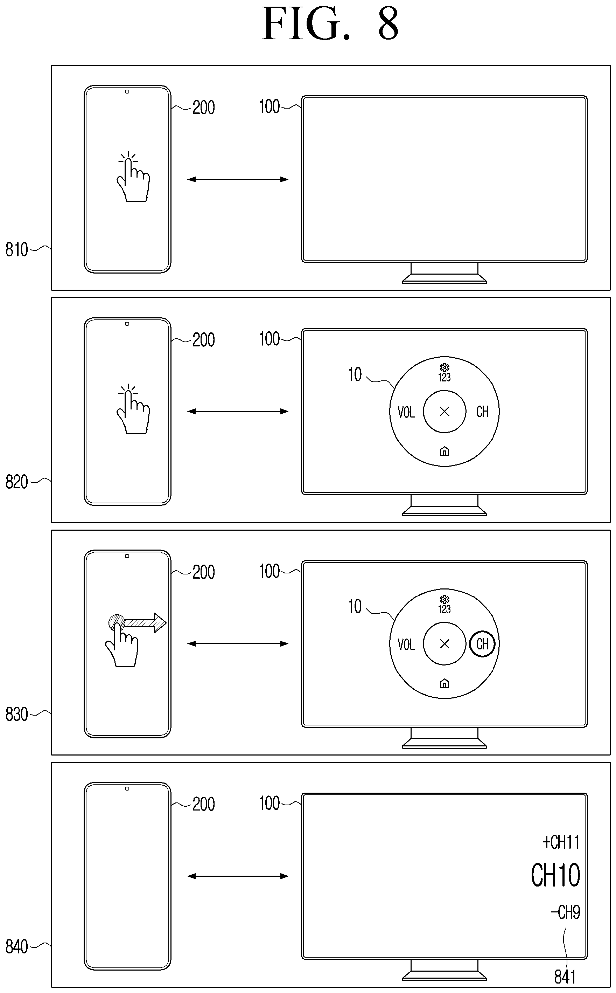

FIG. 8 is a diagram for explaining the screen displayed on the electronic apparatus 100 based on the touch input according to an embodiment.

The electronic apparatus 100 may display the first menu UI 10 based on the predetermined first touch type (double tap).

Referring to exemplary diagram 810 of FIG. 8, the terminal device 200 may receive the tap signal and transmit the same to the electronic apparatus 100. The electronic apparatus 100 may not perform a separate operation depending on the received tap signal. The electronic apparatus 100 may perform a selection operation based on the received tap signal.

Referring to exemplary diagram 820 of FIG. 8, the terminal device 200 may receive the tap signal again consecutively after the tap signal of exemplary diagram 810. Receiving the tap signal again within the threshold time from a time point at which the tap signal of exemplary diagram 810 is received may be described as the double tap. The terminal device 200 may transmit the received touch signal again to the electronic apparatus 100. The electronic apparatus 100 may display the first menu UI 10 based on a double tap signal.

Referring to exemplary diagram 830 of FIG. 8, the terminal device 200 may receive the drag touch signal consecutively after receiving the double tap touch signal. The terminal device 200 may transmit the received touch signal to the electronic apparatus 100. The drag touch signal may include information on the drag direction. The drag touch signal may include information indicating the coordinates (or position) of the touch input being dragged. The electronic apparatus 100 may identify the drag direction based on the received drag touch signal. The electronic apparatus 100 may select a UI corresponding to the drag direction among the plurality of UIs displayed in the first menu UI 10 and perform a function corresponding to the selected UI.

For example, the electronic apparatus 100 may identify the drag direction (rightward) and perform the function (channel control function) corresponding to the drag direction (rightward).

Referring to exemplary diagram 840 of FIG. 8, the electronic apparatus 100 may perform a function corresponding to the drag direction. The electronic apparatus 100 may display a UI 841 related to the performed function. The electronic apparatus 100 may display a screen including the UI 841 related to the performed function.

According to an embodiment, the UI 841 may be displayed corresponding to the drag direction. The electronic apparatus 100 may display the UI 841 in a region corresponding to the drag direction (e.g., right region among all screen regions) if the user drag direction (e.g., rightward) is identified.

According to an embodiment, the UI 841 may be displayed at a predetermined position. The electronic apparatus 100 may display the UI 841 related to the performed function at the predetermined position (e.g., right region among all the screen regions). The predetermined position may be a left region.

FIG. 9 is a diagram for explaining a four-direction first menu UI 10 according to an embodiment.

The electronic apparatus 100 and the terminal device 200 may establish the communication with each other. The terminal device 200 may receive the touch signal of the first touch type. The terminal device 200 may transmit the received touch signal to the electronic apparatus 100. The electronic apparatus 100 may determine whether the received touch signal corresponds to the predetermined touch type. The electronic apparatus 100 may identify that the first event occurs if the received touch signal corresponds to the first touch type. The electronic apparatus 100 may display the first menu UI 10 if the first event is identified. The first event may indicate an event in which the input of the predetermined first touch type (double tap or long press) is received on the terminal device 200.

The menu UI may have different forms depending on the predetermined touch type. The menu UI may be classified into the first menu UI, the second menu UI, and the third menu UI.

A description of the first menu UI is provided with reference to FIGS. 9 to 13.

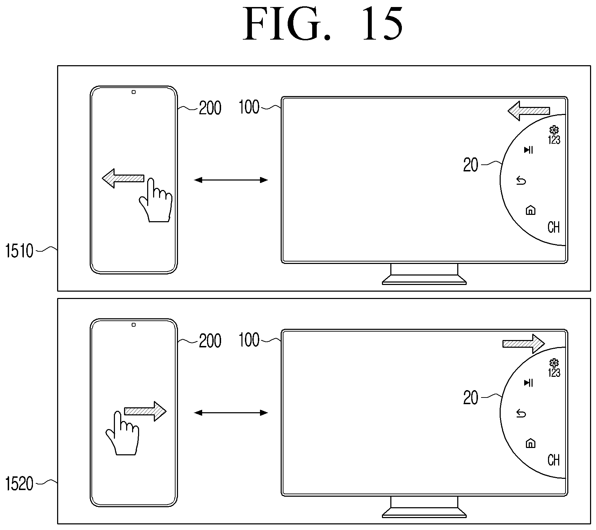

A description of the second menu UI is provided with reference to FIGS. 15 to 17.

A description of the third menu UI is provided with reference to FIG. 36.

Referring to exemplary diagram 900 of FIG. 9, the first menu UI 10 may include four UIs corresponding to four directions.

The terminal device 200 may receive the drag touch signal after receiving a touch signal corresponding to the first touch type. The terminal device 200 may identify a UI corresponding to the drag touch signal among the plurality of UIs 911, 912, 913, and 914 included in the first menu UI 10 if the drag touch signal is received after displaying the first menu UI 10 corresponding to the first touch type. Each of the plurality of UIs 911, 912, 913, and 914 may indicate a specific function performable on the electronic apparatus 100. Corresponding to a specific UI may be described as corresponding to the specific function.

A rightward drag signal 901 may correspond to the first UI 911. The rightward drag signal 901 may correspond to the first function indicated by the first UI 911.

A downward drag signal 902 may correspond to the second UI 912. The downward drag signal 902 may correspond to the second function indicated by the second UI 91**2**.

A leftward drag signal 903 may correspond to the third UI 913. The leftward drag signal 903 may correspond to the third function indicated by the third UI 913.

An upward drag signal 904 may correspond to the fourth UI 914. The upward drag signal 904 may correspond to the fourth function indicated by the fourth UI 914.

For example, the terminal device 200 may receive the rightward drag signal 901. The terminal device 200 may transmit the rightward drag signal 901 to the electronic apparatus 100. The electronic apparatus 100 may receive the rightward drag signal 901 after displaying the first menu UI 10. The electronic apparatus 100 may perform the first function indicated by the first UI 911 corresponding to the rightward drag signal 901 among the plurality of UIs 911, 91**2**, 913, and 914 included in the first menu UI 10.

FIG. 10 is a diagram for explaining the six-direction first menu UI 10 according to an embodiment.

Referring to exemplary diagram 1000 of FIG. 10, the first menu UI 10 may include six UIs corresponding to six directions.

The terminal device 200 may receive the drag touch signal after receiving the touch signal corresponding to the first touch type. The terminal device 200 may identify a UI corresponding to the drag touch signal among a plurality of UIs 1011, 1012, 1013, 1014, 1015, and 1016 included in the first menu UI 10 if the drag touch signal is received after displaying the first menu UI 10 corresponding to the first touch type. Each of the plurality of UIs 1011, 1012, 1013, 1014, 1015, and 1016 may indicate a specific function performable on the electronic apparatus 100. Corresponding to a specific UI may be described as corresponding to the specific function.

An upper rightward drag signal 1001 may correspond to the first UI 1011. The upper rightward drag signal 1001 may correspond to the first function indicated by the first UI 1011.

A lower rightward drag signal 1002 may correspond to the second UI 1012. The lower rightward drag signal 1002 may correspond to the second function indicated by the second UI 1012.

A downward drag signal 1003 may correspond to the third UI 1013. The downward drag signal 1003 may correspond to the third function indicated by the third UI 1013.

A lower leftward drag signal 1004 may correspond to the fourth UI 1014. The lower leftward drag signal 1004 may correspond to the fourth function indicated by the fourth UI 1014.

An upper leftward drag signal 1005 may correspond to the fifth UI 1015. The upper leftward drag signal 1005 may correspond to a fifth function indicated by the fifth UI 1015.

An upward drag signal 1006 may correspond to the sixth UI 1016. The upward drag signal 1006 may correspond to a sixth function indicated by the sixth UI 1016.

For example, the terminal device 200 may receive the upper rightward drag signal 1001 after receiving the touch signal corresponding to the first touch type. The terminal device 200 may transmit the upper rightward drag signal 1001 to the electronic apparatus 100. The electronic apparatus 100 may receive the upper rightward drag signal 1001 after displaying the first menu UI 10. The electronic apparatus 100 may perform the first function indicated by the first UI 1011 corresponding to the upper rightward drag signal 1001 among the plurality of UIs 1011, 1012, 1013, 1014, 1015, and 1016 included in the first menu UI 10.

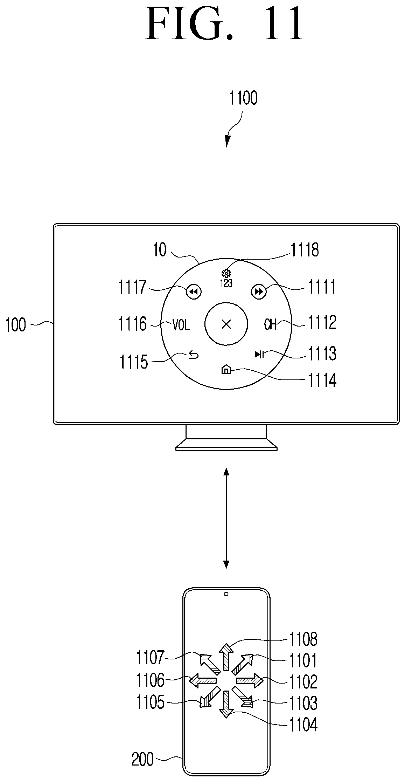

FIG. 11 is a diagram for explaining the eight-direction first menu UI 10 according to an embodiment.

Referring to exemplary diagram 1100 of FIG. 11, the first menu UI 10 may include eight UIs corresponding to eight directions.

The terminal device 200 may receive the drag touch signal after receiving the touch signal corresponding to the first touch type. The terminal device 200 may identify a UI corresponding to the drag touch signal among a plurality of UIs 1111, 1112, 1113, 1114, 1115, 1116, 1117, and 1118 included in the first menu UI 10 if the drag touch signal is received after displaying the first menu UI 10 corresponding to the first touch type. Each of the plurality of UIs 1111, 1112, 1113, 1114, 1115, 1116, 1117, and 1118 may indicate a specific function performable on the electronic apparatus 100. Corresponding to a specific UI may be described as corresponding to the specific function.

An upper rightward drag signal 1101 may correspond to the first UI 1111. The upper rightward drag signal 1101 may correspond to the first function indicated by the first UI 1111.

A rightward drag signal 1102 may correspond to the second UI 1112. The rightward drag signal 1102 may correspond to the second function indicated by the second UI 1112.

A lower rightward drag signal 1103 may correspond to the third UI 1113. The lower rightward drag signal 1103 may correspond to the third function indicated by the third UI **11**13.

A downward drag signal 1104 may correspond to the fourth UI 1114. The downward drag signal 1104 may correspond to the fourth function indicated by the fourth UI 1114.

A lower leftward drag signal 1105 may correspond to the fifth UI 1115. The lower leftward drag signal 1105 may correspond to the fifth function indicated by the fifth UI 1115.

A leftward drag signal 1106 may correspond to the sixth UI 1116. The leftward drag signal 1106 may correspond to the sixth function indicated by the sixth UI 1116.

An upper leftward drag signal 1107 may correspond to the seventh UI 1117. The upper leftward drag signal 1107 may correspond to a seventh function indicated by the seventh UI 1117.

An upward drag signal 1108 may correspond to the eighth UI 1118. The upward drag signal 1108 may correspond to an eighth function indicated by the eighth UI 1118.

For example, the terminal device 200 may receive the upper rightward drag signal 1101 after receiving the touch signal corresponding to the first touch type. The terminal device 200 may transmit the upper rightward drag signal 1101 to the electronic apparatus 100. The electronic apparatus 100 may receive the upper rightward drag signal 1101 after displaying the first menu UI 10. The electronic apparatus 100 may perform the first function indicated by the first UI 1111 corresponding to the upper rightward drag signal 1101 among the plurality of UIs 1111, 1112, 1113, 1114, 1115, 1116, 1117, and 1118 included in the first menu UI 10.

FIG. 12 is a diagram for explaining a display position of the first menu UI according to an embodiment.

Referring to exemplary diagram 1210 of FIG. 12, the electronic apparatus 100 may display the first menu UI 10 at a fixed position. The fixed position may be changed based on the user setting. In exemplary diagram 1210, the fixed position may be the center of the screen.

The first menu UI 10 is displayed in various ways.

For example, the electronic apparatus 100 may display the first menu UI 10 while obscuring an existing screen by setting the transparency of the first menu UI 10 to 0%.

Referring to exemplary diagram 1220 of FIG. 12, the electronic apparatus 100 may display the first menu UI 10 at a previous display position. The first menu UI 10 may have its display position changed based on the user setting. The electronic apparatus 100 may store the previous display position of the first menu UI 10. The electronic apparatus 100 may display the first menu UI 10 at the previous display position if the touch signal corresponding to the first touch type is received later.

According to an embodiment, the previous display position may be different for each user account. The electronic apparatus 100 may acquire the previous display position by using account information authenticated (or connected or linked) to the electronic apparatus 100. The electronic apparatus 100 may be connected to the external server for the communication to acquire the account information.

Referring to exemplary diagram 1230 of FIG. 12, the electronic apparatus 100 may display the first menu UI 10 in a predetermined region 1231. The predetermined region may be changed based on the user setting. The predetermined region may obscure the existing screen. The transparency of the predetermined region may be adjusted based on the user setting.

FIG. 13 is a diagram for explaining an operation for changing the first menu UI 10 based on the touch position according to an embodiment.

The electronic apparatus 100 may determine the display position of the first menu UI 10 by using position information of the touch signal received from the terminal device 200. The terminal device 200 may acquire the information on the position where the touch signal corresponding to the first touch type is received. The electronic apparatus 100 may acquire the information on the position where the touch signal corresponding to the first touch type is received from the terminal device 200. The position information may include a relative position value at which the touch signal corresponding to the first touch type is received in all touchable regions of the terminal device 200.

The electronic apparatus 100 may acquire the mapping information (or mapping table) by mapping all the touchable regions of the terminal device 200 and all displayable regions of the electronic apparatus 100. The mapping information may be information that maps the display region of the electronic apparatus 100 and a touch region of the terminal device 200 based on a relative positional relationship. The electronic apparatus 100 may determine the display position of the first menu UI 10 by using the position information and mapping information of the touch signal corresponding to the first touch type received from the terminal device 200.

According to exemplary diagram 1310 of FIG. 13, the terminal device 200 may identify the first touch type at the center of all the touchable regions of the terminal device 200. The terminal device 200 may transmit the position information including a central position value to the electronic apparatus 100. The electronic apparatus 100 may receive the position information of the touch signal corresponding to the first touch type. The electronic apparatus 100 may display the first menu UI 10 at the center among all the displayable regions based on the position information and the mapping information.

According to exemplary diagram 1320 of FIG. 13, the terminal device 200 may identify the first touch type at the bottom right of all the touchable regions of the terminal device 200. The terminal device 200 may transmit the position information including a position value of the bottom right to the electronic apparatus 100. The electronic apparatus 100 may receive the position information of the touch signal corresponding to the first touch type. The electronic apparatus 100 may display the first menu UI 10 at the bottom right among all the displayable regions based on the position information and the mapping information.

FIG. 14 is a diagram for explaining an operation for displaying the first menu UI 1**0** by using the first touch signal according to an embodiment.

Referring to FIG. 14, the terminal device 200 may receive the first touch signal (S**1**405). The first touch signal may be the touch signal corresponding to the first touch type.

For example, the touch signal corresponding to the first touch type may include at least one of the double tap, the hold, or the long press. The long press may be described as touch or the hold.

The terminal device 200 may transmit the first touch signal to the electronic apparatus 100.

The electronic apparatus 100 may receive the first touch signal from the terminal device 200. The electronic apparatus 100 may determine whether the first touch signal is the touch signal corresponding to the first touch type.

The electronic apparatus 100 may identify whether the first touch signal includes the first touch type (S1411). The electronic apparatus 100 may identify whether the first touch signal corresponds to the first touch type. The first touch type may include the predetermined touch type. For example, the first touch type may include at least one of the double tap or the long press.

The electronic apparatus 100 may wait for the touch signal including the first touch type if the first touch signal does not include the first touch type (S1411-N).

The electronic apparatus 100 may display the first menu UI 10 (S1415) if the first touch signal includes the first touch type (S1411-Y).

The terminal device 200 may receive the second touch signal (S1420) while the first menu UI 10 is displayed. The second touch signal may be the touch signal dragged in a specific direction. The drag signal may be described as the hold and touch movement. The terminal device 200 may transmit the second touch signal to the electronic apparatus 100 (S1425).

The electronic apparatus 100 may receive the second touch signal from the terminal device 200. The electronic apparatus 100 may execute the function corresponding to the second touch signal among the plurality of functions included in the displayed first menu UI 10 (S1430).

The description above describes the operation in which the terminal device 200 transmits the information on the touch signal as it is to the electronic apparatus 100. According to one or more embodiments, the terminal device 200 may analyze the touch signal and transmit a control instruction corresponding to the touch signal to the electronic apparatus 100. The terminal device 200 may transmit the control instruction corresponding to each touch signal to the electronic apparatus 100. The terminal device 200 may check whether the touch signal corresponds to the first touch type and generate the control instruction for displaying the first menu UI 10 if the first touch signal is received. The terminal device 200 may transmit the control instruction for displaying the first menu UI 10 to the electronic apparatus 100. The same configuration may be applied to the description below.

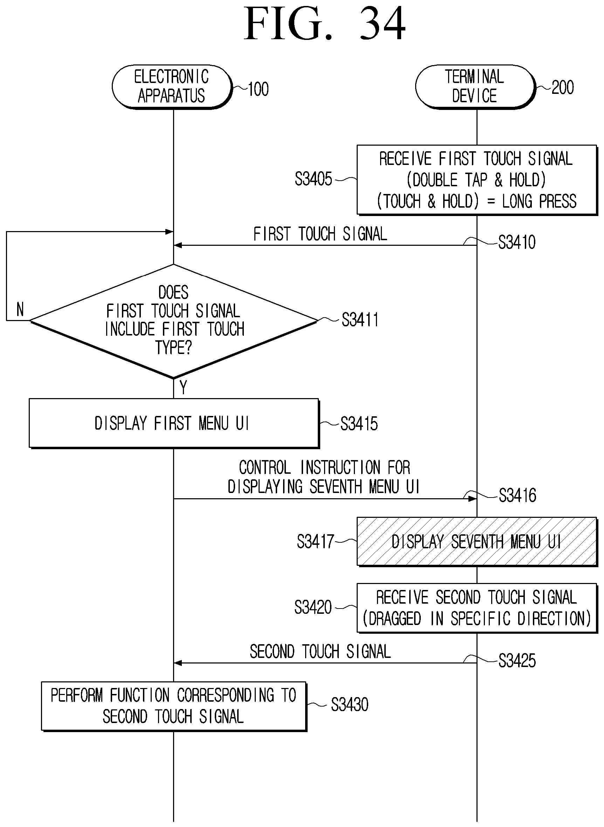

According to an embodiment, the first menu UI 10 may also be displayed on the terminal device 200. A description thereof is provided with reference to FIG. 34.

FIG. 15 is a diagram for explaining an operation for displaying the second menu UI according to an embodiment.

The electronic apparatus 100 may identify whether a second event occurs. The second event may indicate an event that identifies the touch signal of the second touch type. The second touch type may be the edge swipe and hold. The electronic apparatus 100 may display the second menu UI 20 if the touch signal including the edge swipe and hold is received. The edge swipe may indicate a touch that starts in the edge region and is then swiped. A description of the edge swipe is provided with reference to FIG. 18.

Referring to exemplary diagram 1510 of FIG. 15, the terminal device 200 may receive the touch signal including the edge swipe and hold. The terminal device 200 may transmit the received touch signal to the electronic apparatus 100. The electronic apparatus 100 may determine whether the second event occurs based on the received touch signal. The electronic apparatus 100 may identify that the second event occurs if the received touch signal corresponds to the second touch type (edge swipe and hold). The electronic apparatus 100 may display the second menu UI 20 if the second event is identified. The electronic apparatus 100 may identify a swipe direction of the touch signal. The electronic apparatus 100 may display the second menu UI 20 based on the swipe direction.

For example, the electronic apparatus 100 may display the second menu UI 20 to the left from a right edge region of its display region if the touch signal including the swipe and hold to the left from the right edge region of the touch region of the terminal device 200 is received. The second menu UI 20 may display only some regions at first and gradually display all its regions.

Referring to exemplary diagram 1520 of FIG. 15, the terminal device 200 may receive the touch signal including the swipe that moves from its central region to its edge region while the second menu UI 20 is displayed on the electronic apparatus 100. The terminal device 200 may transmit the touch signal to the electronic apparatus 100. The electronic apparatus 100 may hide the second menu UI 20 based on the received touch signal. Hiding the second menu UI 20 may indicate an operation that controls the second menu UI 20 not to be included in the screen displayed by the electronic apparatus 100.

For example, the electronic apparatus 100 may hide the second menu UI 20 that is being displayed in the swipe direction (from the central region to the edge region) if the touch signal including the swipe from the central region of the terminal device 200 to its edge region within its touch region is received. The second menu UI 20 may be hidden gradually. The swipe direction may be opposite to an edge swipe direction that causes the second menu UI 20 to be displayed.

The second menu UI 20 may be displayed while the edge swipe is recognized. However, the second menu UI 20 may not be displayed if the edge swipe ends. The electronic apparatus 100 may control the second menu UI 20 to be displayed or hidden gradually by providing a delay time between a recognition time point of the edge swipe and the display time point of the second menu UI 20.

The first menu UI 10 may be displayed based on the touch signal corresponding to the first touch type.

The second menu UI 20 may be displayed based on a touch signal corresponding to the second touch type.

A second time at which the touch signal corresponding to the second touch type is received may be shorter than a first time at which the touch signal corresponding to the first touch type is received. Therefore, a user using the second menu UI 20 may experience a faster processing speed than a user using the first menu UI 10. The second menu UI 20 may be described as an expert mode UI, as a processing speed of second menu UI 20 is faster than that of the first menu UI 10.

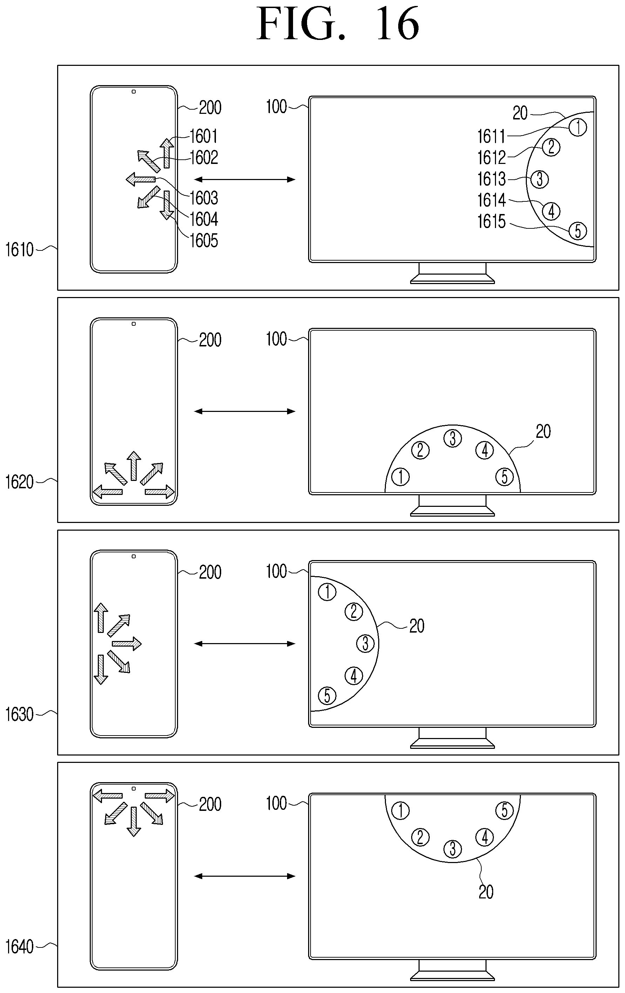

FIG. 16 is a diagram for explaining a position at which the second menu UI is displayed according to an embodiment.

The electronic apparatus 100 may determine from which edge region the touch signal corresponding to the second touch type received from the terminal device 200 is received. The electronic apparatus 100 may display the second menu UI 20 based on the edge region in which the touch signal corresponding to the second touch type is received. The edge region may include the plurality of edge regions. The plurality of edge regions may include a first edge region (right edge region), a second edge region (lower edge region), a third edge region (left edge region), and a fourth edge region (upper edge region). Their detailed descriptions are provided with reference to FIG. 18.

The second menu UI 20 may include five UIs corresponding to five directions. Hereinafter, the description describes the functions of the five UIs corresponding to the five directions. However, the directions and number of UIs may be changed.

Referring to exemplary diagram 1610 of FIG. 16, the terminal device 200 may receive the touch signal including the edge swipe and hold in the first edge region (right edge region). The terminal device 200 may transmit the received touch signal to the electronic apparatus 100. The electronic apparatus 100 may identify whether the received touch signal corresponds to the second touch type. The electronic apparatus 100 may identify the edge region into which the received touch signal is input if the received touch signal corresponds to the second touch type. The electronic apparatus 100 may display the second menu UI 20 at a position corresponding to the edge region. The electronic apparatus 100 may display the second menu UI 20 in a right region (or at a predetermined first position) of all display regions if the edge swipe and hold is identified in the first edge region (right edge region).

The display position of the second menu UI 20 and the form of the second menu UI 20 may be determined based on the edge region where the touch signal corresponding to the second touch type is received. The positions and order of the plurality of UIs included in the second menu UI 20 may be determined based on the edge region where the touch signal corresponding to the second touch type is received.

The terminal device 200 may receive the drag touch signal after receiving the touch signal corresponding to the second touch type. The terminal device 200 may identify a UI corresponding to the drag touch signal among a plurality of UIs 1611, 1612, 1613, 1614, and 1615 included in the second menu UI 20 if the drag touch signal is received after displaying the second menu UI 20 corresponding to the second touch type. Each of the plurality of UIs 1611, 1612, 1613, 1614, and 1615 may indicate a specific function performable on the electronic apparatus 100. Corresponding to a specific UI may be described as corresponding to the specific function.

An upward edge swipe-hold-drag signal 1601 in the right edge region (first edge region) may correspond to the first UI 1611. The drag signal 1601 may correspond to the first function indicated by the first UI 1611.

An upper leftward edge swipe-hold-drag signal 1602 in the right edge region (first edge region) may correspond to the second UI 1612. The drag signal 1602 may correspond to the second function indicated by the second UI 1612.

A leftward edge swipe-hold-drag signal 1603 in the right edge region (first edge region) may correspond to the third UI 1613. The drag signal 1603 may correspond to the third function indicated by the third UI 1613.

A lower leftward edge swipe-hold-drag signal 1604 in the right edge region (first edge region) may correspond to the fourth UI 1614. The drag signal 1604 may correspond to the fourth function indicated by the fourth UI 1614.

A downward edge swipe-hold-drag signal 1605 in the right edge region (first edge region) may correspond to the fifth UI 1615. The drag signal 1605 may correspond to the fifth function indicated by the fifth UI 1615.

Referring to exemplary diagram 1620 of FIG. 16, the terminal device 200 may receive the touch signal including the edge swipe and hold in the second edge region (lower edge region). The terminal device 200 may transmit the received touch signal to the electronic apparatus 100. The electronic apparatus 100 may identify whether the received touch signal corresponds to the second touch type. The electronic apparatus 100 may identify the edge region into which the received touch signal is input if the received touch signal corresponds to the second touch type. The electronic apparatus 100 may display the second menu UI 20 at the position corresponding to the edge region. The electronic apparatus 100 may display the second menu UI 20 in the right region (or at the predetermined first position) of all the display regions if the edge swipe and hold is identified in the second edge region (lower edge region). The description provided in exemplary diagram 1610 may be applied in a similar manner to an operation that executes the function corresponding to the UI displayed in the second menu UI 20 in exemplary diagram 1620. A redundant description thereof is omitted.

Referring to exemplary diagram 1630 of FIG. 16, the terminal device 200 may receive the touch signal including the edge swipe and hold in the third edge region (left edge region). The terminal device 200 may transmit the received touch signal to the electronic apparatus 100. The electronic apparatus 100 may identify whether the received touch signal corresponds to the second touch type. The electronic apparatus 100 may identify the edge region into which the received touch signal is input if the received touch signal corresponds to the second touch type. The electronic apparatus 100 may display the second menu UI 20 at the position corresponding to the edge region. The electronic apparatus 100 may display the second menu UI 20 in the right region (or at the predetermined first position) of all the display regions if the edge swipe and hold is identified in the third edge region (left edge region). The description provided in exemplary diagram 1610 may be applied in the similar manner to an operation that executes the function corresponding to the UI displayed in the second menu UI **2**0 in exemplary diagram 1630. A redundant description thereof is omitted.

Referring to exemplary diagram 1640 of FIG. 16, the terminal device 200 may receive the touch signal including the edge swipe and hold in the fourth edge region (upper edge region). The terminal device 200 may transmit the received touch signal to the electronic apparatus 100. The electronic apparatus 100 may identify whether the received touch signal corresponds to the second touch type. The electronic apparatus 100 may identify the edge region into which the received touch signal is input if the received touch signal corresponds to the second touch type. The electronic apparatus 100 may display the second menu UI 20 at the position corresponding to the edge region. The electronic apparatus 100 may display the second menu UI 20 in the right region (or at the predetermined first position) of all the display regions if the edge swipe and hold is identified in the fourth edge region (upper edge region). The description provided in exemplary diagram 1610 may be applied in the similar manner to an operation that executes the function corresponding to the UI displayed in the second menu UI 20 in exemplary diagram 1640. A redundant description thereof is omitted.

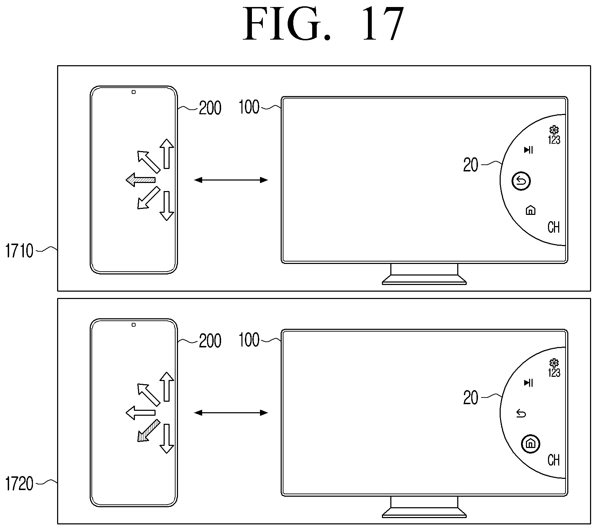

FIG. 17 is a diagram for explaining an operation for selecting one function among the second menu UIs according to an embodiment.

Referring to exemplary diagram 1710 of FIG. 17, the terminal device 200 may receive the touch signal including the edge swipe, hold, and drag in the right edge region (first edge region). The edge swipe direction is assumed to be leftward. The terminal device 200 may transmit the touch signal to the electronic apparatus 100. The electronic apparatus 100 may identify the second event based on the touch signal. The electronic apparatus 100 may display the second menu UI 20 if the second event (the event in which the touch signal corresponds to the second touch type) is identified. The electronic apparatus 100 may identify the edge swipe direction (leftward). The electronic apparatus 100 may perform a function (return function) corresponding to the edge swipe direction (leftward) among the plurality of functions included in the second menu UI 20. The return function may indicate a function that displays a previous screen (or cancels the most recent command) based on a current screen.

Referring to exemplary diagram 1720 of FIG. 17, the terminal device 200 may receive the touch signal including the edge swipe, hold, and drag in the right edge region (first edge region). The edge swipe direction is assumed to be toward the lower left. The terminal device 200 may transmit the touch signal to the electronic apparatus 100. The electronic apparatus 100 may identify the second event based on the touch signal. The electronic apparatus 100 may display the second menu UI 20 if the second event (the event in which the touch signal corresponds to the second touch type) is identified. The electronic apparatus 100 may identify the edge swipe direction (lower leftward). The electronic apparatus 100 may perform a function (home function) corresponding to the edge swipe direction (lower leftward) among the plurality of functions included in the second menu UI 20. The home function may indicate a function that displays a start screen (or a predetermined screen) related to a currently provided service.

FIG. 18 is a diagram for explaining the edge swipe operation according to an embodiment.

Referring to exemplary diagram 1800 of FIG. 18, a portion of all the touch regions of the terminal device 200 may be classified as an edge region. The terminal device 200 may include four edge regions. The touch region of the terminal device 200 may include a first edge region 1810, a second edge region 1820, a third edge region 1830, and a fourth edge region 1840.

The first edge region 1810 may be described as a right edge region. The second edge region 1820 may be described as a lower edge region. The third edge region 1830 may be described as a left edge region. The fourth edge region 1840 may be described as an upper edge region.

All the touch regions of the terminal device 200 may include an unrecognizable region. The unrecognizable region may indicate a region where the touch input for displaying the second menu UI 20 is not recognized. The unrecognizable region may be a region in which it is difficult to classify the edge region. The unrecognizable region may be described as a nontouchable region or an edge-unrecognized region. The unrecognizable region may indicate a corner region. The unrecognizable region may include a first unrecognizable region 1861 adjacent to the first edge region 1810 and the second edge region 1820, a second unrecognizable region 1862 adjacent to the second edge region 1820 and the third edge region 1830, a third unrecognizable region 1863 adjacent to the third edge region 1830 and the fourth edge region 1840, and a fourth unrecognizable region 1864 adjacent to the fourth edge region 1840 and the first edge region 1810.

The electronic apparatus 100 is assumed to display the second menu UI 20 at a corner position of the electronic apparatus 100 corresponding to the unrecognizable region if the touch signal corresponding to the second touch type is received in the unrecognizable region. It may be difficult to display all the plurality of UIs shown in FIG. 16 if the second menu UI 20 is displayed at the corner position. It is thus possible to solve this problem by setting the unrecognizable region.

The first edge region may be present between a line 1811 and a line 1812. A width of the first edge region may be a first length "a".

The second edge region may be present between a line 1821 and a line 1822. A width of the second edge region may be a second length "b".

The third edge region may be present between a line 1831 and a line 1832. A width of the second edge region may be the first length "a".

The fourth edge region may be present between a line 1841 and a line 1842. A width of the fourth edge region may be the second length "b".

For example, the first length "a" and the second length "b" may be different from each other.

For example, the first length "a" and the second length "b" may be the same as each other.

All the touch regions of the terminal device 200 may include a central region 1850. The central region 1850 may indicate an internal region formed by the lines 1812, 1822, **1**8**3**2, and 1842.

The edge swipe may be an input that moves the touch from the edge region to the central region. The edge swipe in the first edge region 1810 may indicate the swipe that moves from the first edge region 1810 to the central region 1850. The edge swipe in the second edge region 1820 may indicate the swipe that moves from the second edge region 1820 to the central region 1850. The edge swipe in the third edge region 1830 may indicate the swipe that moves from the third edge region 1830 to the central region 1850. The edge swipe in the fourth edge region 1840 may indicate the swipe that moves from the fourth edge region 1840 to the central region 1850.

For example, it is assumed that the touch signal including the edge swipe, hold, and drag is received from a first position p1 to a second position p2. The first position p1 may be a point where an initial touch is input, and the second position p2 may be a point where the last touch is input. The second position p2 may be a position where a release input is recognized. The electronic apparatus 100 may display the second menu UI 20 if the initial touch starts from the first edge region 1810 and passes the line 1812. The electronic apparatus 100 may hide the second menu UI 20 if the touch ends at the second position p2 included in the central region 1850 starting from the first edge region 1810. The electronic apparatus 100 may not display the second menu UI 20.

FIG. 19 is a diagram for explaining an operation for displaying the second menu UI according to an embodiment.

Referring to FIG. 19, the terminal device 200 may receive the third touch signal (S1905). The third touch signal may include the edge swipe and hold. The terminal device 200 may transmit the third touch signal to the electronic apparatus 100 (S1910).

The electronic apparatus 100 may receive the third touch signal from the terminal device 200. The electronic apparatus 100 may identify whether the third touch signal includes the second touch type (S1911). The second touch type may indicate the touch signal including the edge swipe and hold.

The electronic apparatus 100 may display the second menu UI 20 (S1915) if the third touch signal includes the second touch type (S1911-Y).

The terminal device 200 may receive the fourth touch signal (S1920) while the second menu UI 20 is displayed. The fourth touch signal may include the drag in a specific direction. The terminal device 200 may transmit the fourth touch signal to the electronic apparatus 100 (S1925).

The electronic apparatus 100 may receive the fourth touch signal from the terminal device 200. The electronic apparatus 100 may perform a function corresponding to the fourth touch signal (S1930).

The electronic apparatus 100 may identify whether the drag is included based on the fourth touch signal. The electronic apparatus 100 may identify the drag direction if the fourth touch signal includes the drag. The electronic apparatus 100 may perform the function corresponding to the drag direction. The electronic apparatus 100 may perform the function corresponding to the drag direction of the fourth touch signal among the functions indicated by the second menu UI 20.

According to an embodiment, the electronic apparatus 100 may hide the second menu UI if a release (touch release) signal is identified in relation to the fourth touch signal including the drag. A detailed description thereof is already provided with reference to FIG. 18.

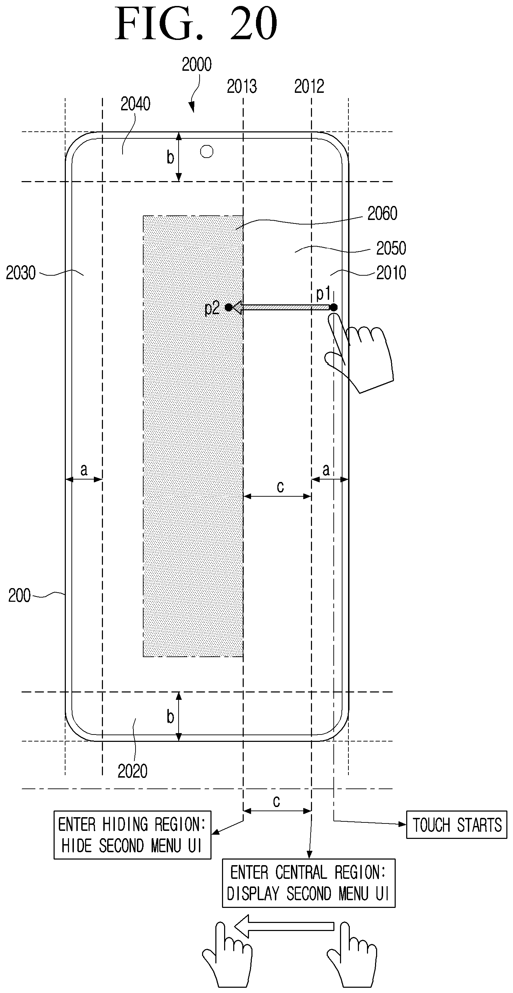

FIG. 20 is a diagram for explaining the edge swipe operation according to an embodiment.

Exemplary diagram 2000 of FIG. 20 may correspond to exemplary diagram 1800 of FIG. 18.

A first edge region 2010, a second edge region 2020, a third edge region 2030, a fourth edge region 2040, and a central region 2050 in FIG. 20 may correspond to the first edge region 1810, the second edge region 1820, the third edge region 1830, the fourth edge region 1840, and the central region 1850 in FIG. 18. Their redundant descriptions are omitted. Unlike exemplary diagram 1800 of FIG. 18, a region used to hide the second menu UI 20 may be present in exemplary diagram 2000 of FIG. 20.

All the touch regions of the terminal device 200 may include a predetermined hiding region 2060. The electronic apparatus 100 may hide the second menu UI 20 if the touch signal is recognized in the hiding region 2060. The hiding region 2060 may be changed based on the user setting.

For example, it is assumed that the touch signal including the edge swipe, hold, and drag is received from the first position p1 to the second position p2. The first position p1 may be the point where the initial touch is input, and the second position p2 may be the point where the last touch is input. The second position p2 may be the position where the release input is recognized. The electronic apparatus 100 may display the second menu UI 20 if the initial touch is recognized as starting from the first edge region 2010 and consecutively recognized in the central region 2050. The electronic apparatus 100 may hide the second menu UI 20 if the touch enters the hiding region 2060 through the central region 2050 from the first edge region 2010. The electronic apparatus 100 may not display the second menu UI 20.

A length between a line 2012 indicating the central region 2050 and a line 2013 indicating the hiding region 2060 may be a third length "c". The electronic apparatus 100 may hide the second menu UI 20 if the touch moves by the threshold distance "c" or more from the time point at which the touch enters the central region 2050.

The user may need to input the drag signal into the central region 2050 if the user wants to perform the specific function based on the fourth touch signal described with reference to FIG. 19. The terminal device 200 may transmit the fourth touch signal to the electronic apparatus 100 if the terminal device 200 receives the fourth touch signal that is dragged in the specific direction within the central region 2050. The electronic apparatus 100 may perform the specific function corresponding to the fourth touch signal.

According to an embodiment, the electronic apparatus 100 may perform the function corresponding to the drag direction if the touch signal is identified as being dragged only within the central region 2050 while the second menu UI is displayed.

According to an embodiment, the electronic apparatus 100 may hide the second menu UI if the touch signal is identified as being dragged from the central region 2050 to the hiding region 2060 while the second menu UI is displayed.

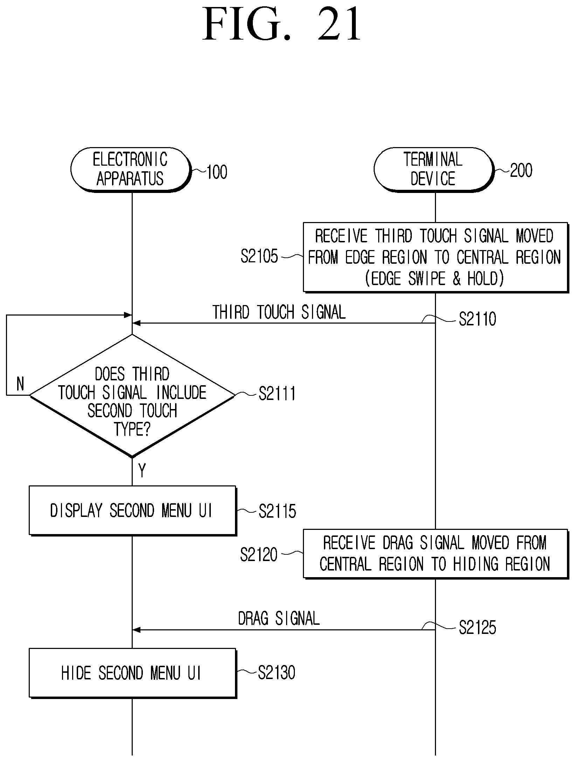

FIG. 21 is a diagram for explaining an operation for displaying the second menu UI by classifying three regions according to an embodiment.

Referring to FIG. 21, the terminal device 200 may receive the third touch signal moved from the edge region to the central region (S2105). The terminal device 200 may transmit the third touch signal to the electronic apparatus 100 (S2110).

The electronic apparatus 100 may receive the third touch signal from the terminal device 200. The electronic apparatus 100 may identify whether the third touch signal includes the second touch type (S2111).

The electronic apparatus 100 may display the second menu UI 20 (S2115) if the third touch signal includes the second touch type (S2111-Y).

The terminal device 200 may receive the drag signal dragged from the central region to the hiding region (S2120) while the second menu UI 20 is displayed. The terminal device 200 may transmit the drag signal to the electronic apparatus 100.

The electronic apparatus 100 may receive the drag signal dragged to the hiding region from the terminal device 200. The electronic apparatus 100 may hide the second menu UI 20 (S2130) if the drag signal is received.

The electronic apparatus 100 may identify whether the drag signal is a signal dragged from the central region to the hiding region. The electronic apparatus 100 may identify that a third event occurs if the drag signal is the signal dragged from the central region to the hiding region. The electronic apparatus 100 may hide the second menu UI 20 if the third event is identified. The electronic apparatus 100 may display a screen that does not include the second menu UI 20.

FIG. 22 is a diagram for explaining an operation for performing the specific function without displaying the menu UI according to an embodiment.

The electronic apparatus 100 may perform the specific function directly in response to the user touch input without displaying a separate menu UI.

Referring to FIG. 22, the terminal device 200 may receive the fifth touch signal (S2205). The terminal device 200 may transmit the fifth touch signal to the electronic apparatus 100 (S2210).

The electronic apparatus 100 may receive the fifth touch signal from the terminal device 200. The electronic apparatus 100 may identify whether the fifth touch signal includes the third touch type (S2215).

For example, the third touch type may be the touch signal including the double tap, the hold, and the drag. The third touch type may indicate the touch signal that the double tap, the hold, and the drag are all recognized within the threshold time.

For example, the third touch type may be the touch signal including the long press, the hold, and the drag. The third touch type may indicate the touch signal in which the long press, the hold, and the drag are all recognized within the threshold time.

The electronic apparatus 100 may identify the drag direction included in the fifth touch signal (S2220) without displaying the first menu UI 10 if the third touch type is included in the fifth touch signal (S2215-Y). The electronic apparatus 100 may perform the function corresponding to the drag direction among the plurality of functions included in the first menu UI 10 (S2225).

The electronic apparatus 100 may identify whether a fourth touch type is included in the fifth touch signal (S2230) if the third touch type is not included in the fifth touch signal (S2215-N).

For example, the fourth touch type may be the touch signal including the edge swipe, the hold, and the drag. The fourth touch type may indicate the touch signal in which the edge swipe, the hold, and the drag are all recognized within the threshold time.

The electronic apparatus 100 may identify the swipe direction included in the fifth touch signal (S2235) if the fourth touch type is included in the fifth touch signal (S2230-Y). The electronic apparatus 100 may perform a function corresponding to the swipe direction among the plurality of functions included in the second menu UI 20 (S2240).

FIG. 22 shows not displaying the first menu UI 10 or the second menu UI 20. According to an embodiment, the electronic apparatus 100 may display the first menu UI 10 having the transparency of a threshold ratio or more if the third touch type is identified. According to an embodiment, the electronic apparatus 100 may display the second menu UI 20 having the transparency of the threshold ratio or more if the fourth touch type is identified.

FIG. 23 is a diagram for explaining an operation for receiving an additional touch input in the predetermined mode according to an embodiment.

Referring to FIG. 23, the electronic apparatus 100 may receive the touch signal (S2326). The touch signal may include a signal for performing the specific function through the displayed menu UI. The touch signal may be one of the second touch signal of FIG. 14, the fourth touch signal of FIG. 19, or the fifth touch signal of FIG. 22.

The electronic apparatus 100 may perform a function corresponding to the touch signal (S2330) after receiving the touch signal. The electronic apparatus 100 may identify whether the predetermined mode is executed as a result of performing the function (S2335). The predetermined mode may include at least one of the channel control mode or the volume control mode.

The electronic apparatus 100 may repeatedly perform operations S2326, S2330, and S2335 if the predetermined mode is not executed (S2335-N).

The electronic apparatus 100 may display a function UI corresponding to the predetermined mode (S2340) if the predetermined mode is executed (S2335-Y). The function UI may indicate a UI indicating that the predetermined mode is being executed. The function UIs may correspond to UIs 2511 and 2521 shown in FIG. 25.

The terminal device 200 may receive the sixth touch signal (S2345) while the function UI is displayed. The sixth touch signal may include a signal dragged in the specific direction. The terminal device 200 may transmit the sixth touch signal to the electronic apparatus 100 (S2350).

The electronic apparatus 100 may receive the sixth touch signal from the terminal device 200. The electronic apparatus 100 may perform a corresponding function based on the sixth touch signal (S2355). The electronic apparatus 100 may perform the function corresponding to the sixth touch signal among the plurality of functions included in the predetermined mode.

For example, the predetermined mode may be the channel control mode. The electronic apparatus 100 may identify a drag direction of the sixth touch signal. The electronic apparatus 100 may perform the function (channel change) corresponding to the drag direction in the channel control mode.

For example, the predetermined mode could be the volume control mode. The electronic apparatus 100 may identify the drag direction of the sixth touch signal. The electronic apparatus 100 may perform the function (volume change) corresponding to the drag direction in the volume control mode.

As an example described above, the sixth touch signal is described as a signal dragged in the specific direction. However, the sixth touch signal may include a signal that touches a specific region (e.g., upper region or lower region on the screen) of the electronic apparatus within a predetermined time instead of the drag signal. It is assumed that an upper side of a horizontal imaginary midline among all the regions of the electronic apparatus is a first region and its lower side is a second region. The terminal device 200 may receive a tap touch signal input into the first region (upper region) or the second region (lower region) while the function UI is displayed on the electronic apparatus 100. The electronic apparatus 100 may perform a function (e.g., volume up or channel up) corresponding to the first region if it is identified that the tap touch signal is received in the first region among all the regions of the terminal device 200. The electronic apparatus 100 may perform a function (e.g., volume down or channel down) corresponding to the second region if it is identified that the tap touch signal is received in the second region among all the regions of the terminal device 200.

FIG. 24 is a diagram for explaining an operation for receiving an additional touch input in the predetermined mode according to an embodiment.

Operations S2426, S2430, S2435, S2440, S2445, S2450, and S2455 of FIG. 24 may correspond to operations S2326, S2330, S2335, S2340, S2345, S2350, and S2355 of FIG. 2**3**. Their redundant descriptions are omitted.

The electronic apparatus 100 may transmit an instruction (or control signal) for displaying the function UI to the terminal device 200 (S2441) after the electronic apparatus 100 displays the function UI.

The terminal device 200 may receive an instruction for displaying the function UI from the electronic apparatus 100. The terminal device 200 may display the function UI corresponding to the predetermined mode (S2442). The function UI displayed on the terminal device 200 may correspond to a UI 2522 shown in FIG. 25.

The terminal device 200 may receive the sixth touch signal while displaying the function UI, and the electronic apparatus 100 may perform the function corresponding to the drag direction included in the sixth touch signal.

FIG. 25 is a diagram for explaining the touch input screen for the predetermined mode according to an embodiment.

The electronic apparatus 100 may perform the predetermined mode. The electronic apparatus 100 may display a screen including the function UI 2511 or 2521 corresponding to the predetermined mode if the predetermined mode is performed. The terminal device 200 may receive the sixth touch signal while the function UI 2511 or 2521 is displayed. For example, the predetermined mode may be the channel control mode. The function UI may be a UI that indicates a specific function.

Referring to exemplary diagram 2510 of FIG. 25, the terminal device 200 may not display the function UI while the electronic apparatus 100 performs the predetermined mode.

Referring to exemplary diagram 2520 of FIG. 25, the terminal device 200 may display the function UI 2522 while the electronic apparatus 100 performs the predetermined mode. The user may input the touch signal through the function UI 2522.

According to an embodiment, the electronic apparatus 100 may increase a channel change speed if a signal touching the specific region of the function UI 2522 for the threshold time or more is received by the terminal device 200. The terminal device 200 may receive a signal touching the specific region of the function UI 2522 for the threshold time or more. The terminal device 200 may transmit the received signal to the electronic apparatus 100. The electronic apparatus 100 may change channels at a faster speed than a default channel change speed based on the received signal.

FIG. 26 is a diagram for explaining an operation for determining a color of the touch input screen for the predetermined mode according to an embodiment.

The electronic apparatus 100 may perform the predetermined mode. The terminal device 200 may display the background screen corresponding to the predetermined mode while the electronic apparatus 100 performs the predetermined mode.

Referring to exemplary diagram 2610 of FIG. 26, the electronic apparatus 100 may display a function UI 2611 while performing the channel change mode. The terminal device 200 may display a first background screen corresponding to the channel change mode while a function UI 2621 is displayed. The first background screen may be a screen of a first color.

Referring to exemplary diagram 2620 of FIG. 26, the electronic apparatus 100 may display the function UI 2621 while performing the volume change mode. The terminal device 200 may display a second background screen corresponding to the volume change mode while the function UI 2621 is displayed. The second background screen may be a screen of a second color.

The first and second colors may be different from each other. Due to the different colors, the user may recognize which mode the electronic apparatus 100 performs without directly having to look at the terminal device 200.

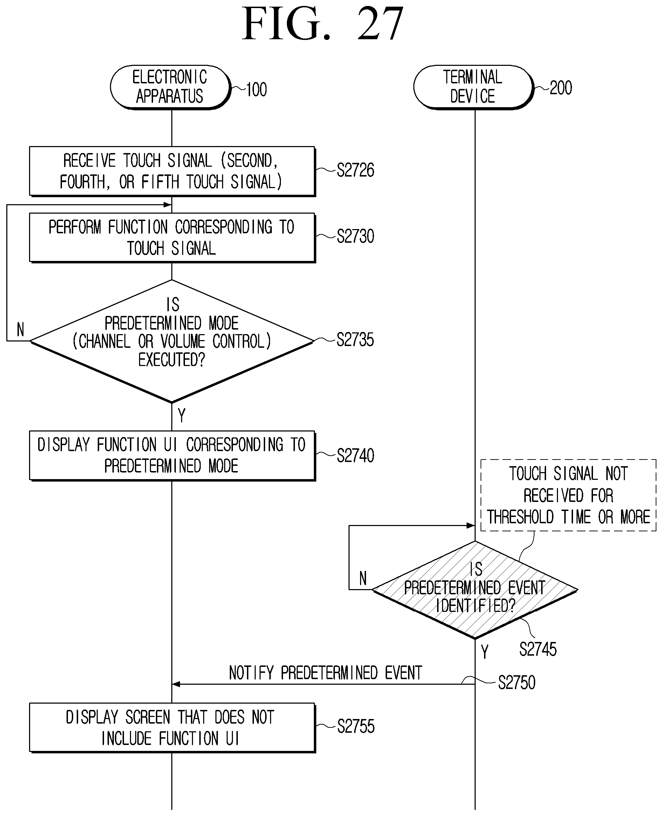

FIG. 27 is a diagram for explaining an end event of the predetermined mode according to an embodiment.

Operations S2726, S2730, S2735, and S2740 of FIG. 27 may correspond to operations S2326, S2330, S2335, and S2340 of FIG. 23. Their redundant descriptions are omitted.

The terminal device 200 may determine whether a predetermined event (fourth event) is identified (S2745) while the function UI is displayed.

The predetermined event (fourth event) may include an event in which the touch signal is not received for the threshold time or more.

The terminal device 200 may transmit a notification (or notification signal) indicating an occurrence of the predetermined event to the electronic apparatus 100 (S2750) if the predetermined event is identified (S2745-Y).

The electronic apparatus 100 may receive the notification from the terminal device 200. The electronic apparatus 100 may display a screen that does not include the function UI based on the notification (S2755). The electronic apparatus 100 may end the predetermined mode.

The terminal device 200 may receive the tap touch signal while the function UI corresponding to the predetermined mode is displayed. The terminal device 200 may transmit the tap touch signal to the electronic apparatus 100. The electronic apparatus 100 may perform the function corresponding to the tap touch signal (e.g., volume up, volume down, channel up, or channel down). A description thereof is already provided with reference to FIG. 23.

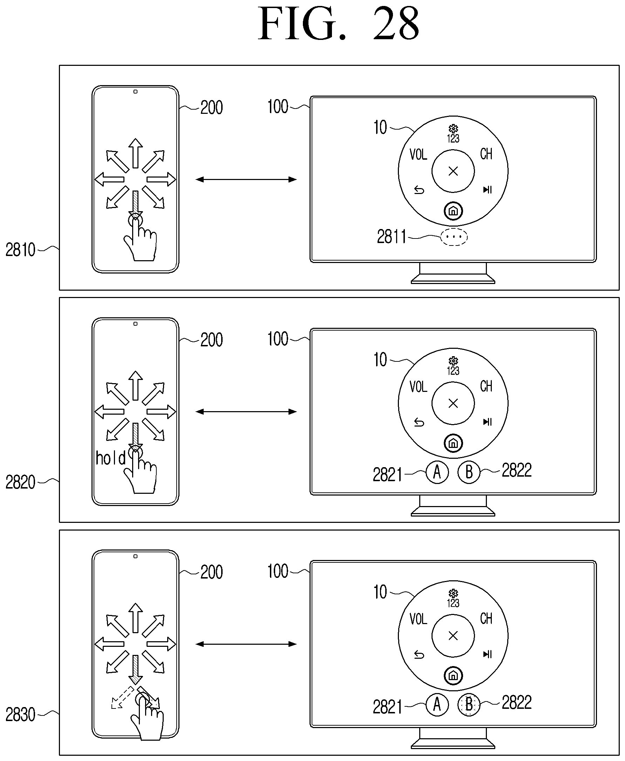

FIG. 28 is a diagram for explaining a sub-menu UI corresponding to the first menu UI according to an embodiment.

The first menu UI 10 may include the plurality of UIs. At least one of the plurality of UIs may include a sub-menu. The sub-menu may be described as a lower-level menu. The sub-menu may indicate an additional menu capable of being selected if a menu is selected. A menu that is initially displayed may be a main menu, and a menu displayed as a lower-level item may be described as the sub-menu. The main menu may be described as a first-level menu and the sub-menu may be described as a second-level menu.

Referring to exemplary diagram 2810 of FIG. 28, the terminal device 200 may receive the touch signal corresponding to the first touch type. The terminal device 200 may receive the touch signal including the double tap and hold. The electronic apparatus 100 may display the first menu UI 10. A menu that includes the sub-menu may be present among the plurality of menus included in the first menu UI 10. The electronic apparatus 100 may display a UI 2811 indicating the sub-menu together with the first menu UI 10 if the menu including the sub-menu is present. The terminal device 200 may receive the drag signal (downward) in a direction corresponding to the menu including the sub-menu.

Referring to exemplary diagram 2820 of FIG. 28, the terminal device 200 may receive the drag signal (downward) in the direction corresponding to the menu including the sub-menu while the first menu UI 10 and the UI 2811 are displayed. The terminal device 200 may transmit the received signal to the electronic apparatus 100. The electronic apparatus 100 may display a UI 2821 or 2822 indicating the sub-menu. The terminal device 200 may receive the touch signal including the hold while the UI 2821 or 2822 indicating the sub-menu is displayed.

Referring to exemplary diagram 2830 of FIG. 28, the terminal device 200 may receive an additional drag touch signal consecutively to a hold touch signal while the UI 2821 or 2822 indicating the sub-menu is displayed. The terminal device 200 may transmit the received signal to the electronic apparatus 100. The electronic apparatus 100 may identify the drag direction (lower rightward) based on the received signal. The electronic apparatus 100 may execute a sub-menu B corresponding to the drag direction (lower rightward).

According to an embodiment, it is possible to execute a sub-menu A or B based on another touch signal instead of the additional drag touch. The electronic apparatus 100 may identify an event in which an additional first touch signal (e.g., tap signal) is received on the terminal device 200 or an additional second touch signal (e.g., drag signal) is received on the terminal device 200 within a predetermined time from a time point that displays the UI 2821 or 2822 indicating the sub-menu. The electronic apparatus 100 may execute the sub-menu corresponding to the additional second touch signal if the event is identified.

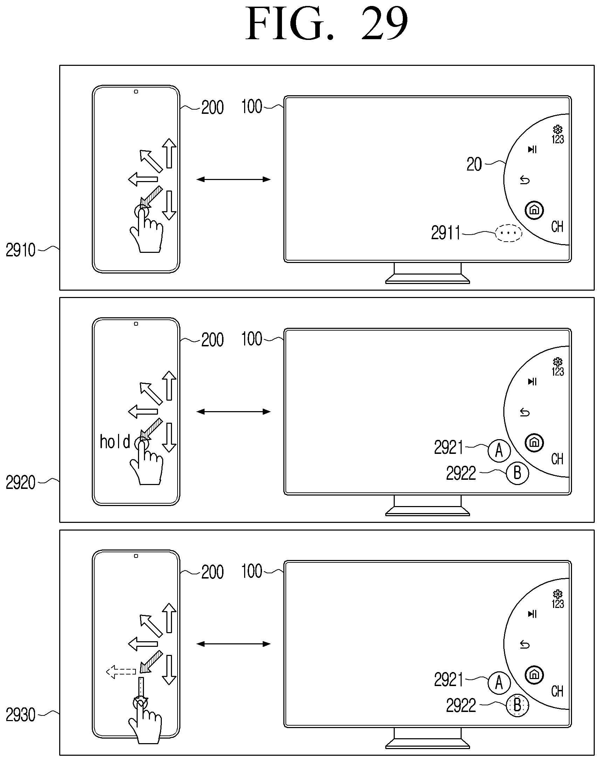

FIG. 29 is a diagram for explaining a sub-menu UI corresponding to the second menu UI according to an embodiment.

The second menu UI 20 may include the plurality of UIs. At least one of the plurality of UIs may include the sub-menu.

Referring to exemplary diagram 2910 of FIG. 29, the terminal device 200 may receive the touch signal corresponding to the second touch type. The terminal device 200 may receive the touch signal including the edge swipe and hold. The electronic apparatus 100 may display the second menu UI 20. The menu that includes the sub-menu may be present among the plurality of menus included in the second menu UI 20. The electronic apparatus 100 may display a UI 2911 indicating the sub-menu together with the second menu UI 20 if the menu including the sub-menu is present. The terminal device 200 may receive the drag signal in the direction (lower leftward) corresponding to the menu including the sub-menu.

Referring to exemplary diagram 2920 of FIG. 29, the terminal device 200 may receive the drag signal in the direction (lower leftward) corresponding to the menu including the sub-menu while the second menu UI 20 and the UI 2911 are displayed. The terminal device 200 may transmit the received signal to the electronic apparatus 100. The electronic apparatus 100 may display a UI 2921 or 2922 indicating the sub-menu. The terminal device 200 may receive the touch signal including the hold while the UI 2921 or 2922 indicating the sub-menu is displayed.

Referring to exemplary diagram 2930 of FIG. 29, the terminal device 200 may receive the additional drag touch signal consecutively to the hold touch signal while the UI 2921 or 2922 indicating the sub-menu is displayed. The terminal device 200 may transmit the received signal to the electronic apparatus 100. The electronic apparatus 100 may identify the drag direction (downward) based on the received signal. The electronic apparatus 100 may execute the sub-menu B corresponding to the drag direction (downward).

According to an embodiment, the electronic apparatus 100 may execute the sub-menu A or B based on the additional first touch signal (e.g., tap signal) or the additional second touch signal (e.g., drag signal) instead of the additional drag touch. A description thereof is already provided with reference to FIG. 28.

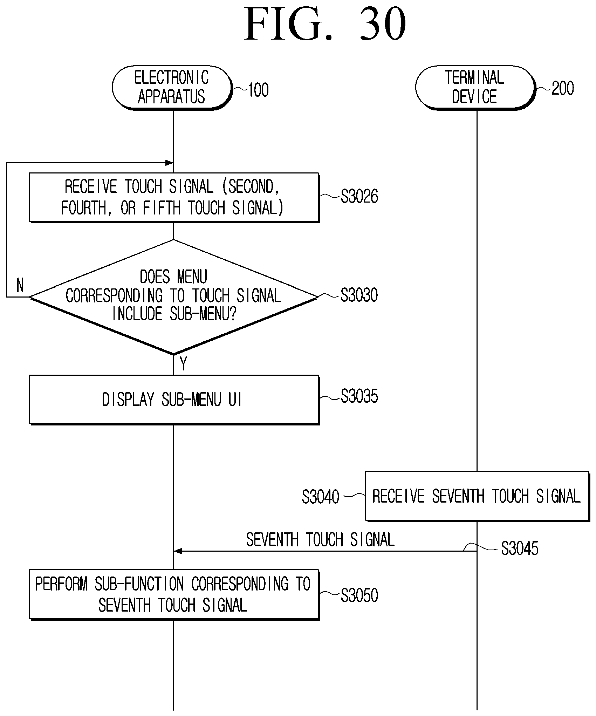

FIG. 30 is a diagram for explaining an operation for displaying the sub-menu UI according to an embodiment.

Referring to FIG. 30, the electronic apparatus 100 may receive the touch signal (S3026). The touch signal may include the signal for performing the specific function through the displayed menu UI. The touch signal may be one of the second touch signal of FIG. 14, the fourth touch signal of FIG. 19, or the fifth touch signal of FIG. 22.

The electronic apparatus 100 may identify whether the menu corresponding to the touch signal includes the sub-menu (S3030). The electronic apparatus 100 may display the sub-menu UI (S3035) if the menu corresponding to the touch signal includes the sub-menu (S3030-Y).

The terminal device 200 may receive a seventh touch signal (S3040) while the sub-menu UI is displayed. The terminal device 200 may transmit the seventh touch signal to the electronic apparatus 100 (S3045).

The electronic apparatus 100 may receive the seventh touch signal from the terminal device 200. The electronic apparatus 100 may perform a sub-function corresponding to the seventh touch signal (S3050).

The sub-menu UI may include the plurality of sub-menus. The electronic apparatus 100 may perform the sub-function corresponding to the seventh touch signal among the plurality of sub-menus. The seventh touch signal may correspond to the touch signal received by the terminal device 200 in exemplary diagram 2830 of FIG. 28 and exemplary diagram 2930 of FIG. 29.

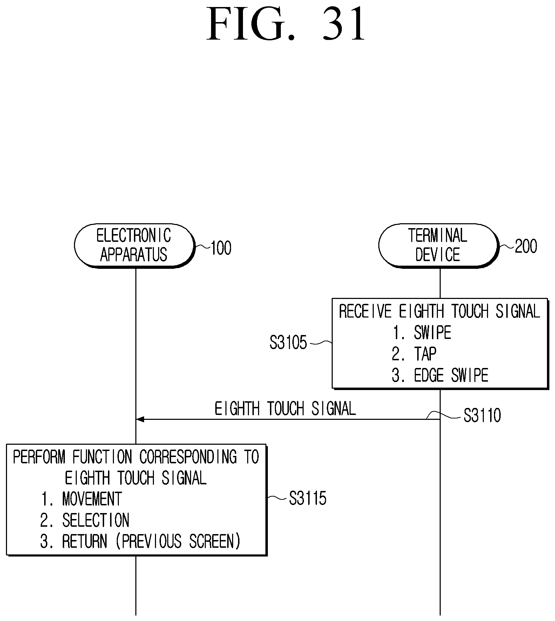

FIG. 31 is a diagram for explaining an operation for receiving a general touch signal in the touch recognition mode (first mode) according to an embodiment.

Referring to FIG. 31, the terminal device 200 may receive an eighth touch signal (S3105). The eighth touch signal may be one of the swipe, the tap, or the edge swipe. The terminal device 200 may transmit the eighth touch signal to the electronic apparatus 100 (S**3**110).

The electronic apparatus 100 may receive the eighth touch signal from the terminal device 200. The electronic apparatus 100 may perform a function corresponding to the eighth touch signal (S3115).

For example, the electronic apparatus 100 may perform a movement function if the eighth touch signal is the swipe. The movement function may include an operation for moving a cursor or a currently selected active window (highlight, object, UI, or the like).

For example, the electronic apparatus 100 may perform a selection function if the eighth touch signal is the tap. The selection function may include an operation for selecting a currently selected active item.

For example, the electronic apparatus 100 may perform the return function if the eighth touch signal is the edge swipe. The return function may indicate a function that displays the previous screen.

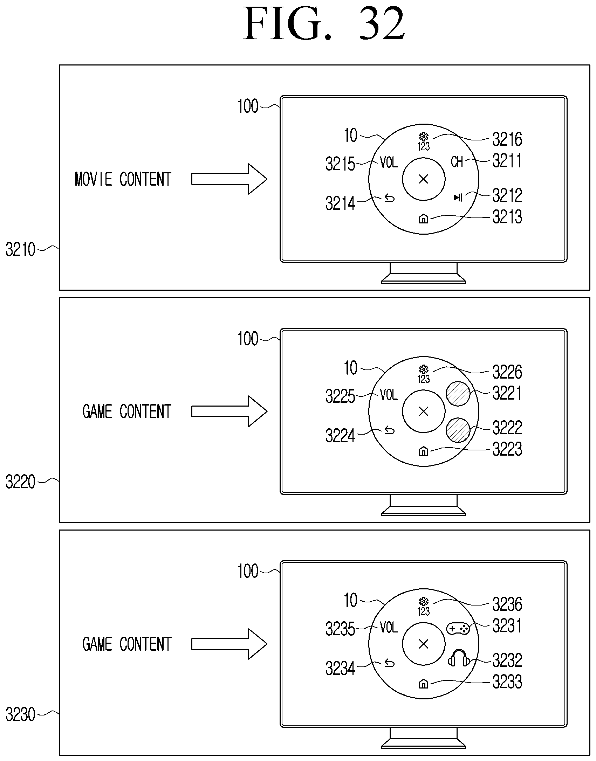

FIG. 32 is a diagram for explaining an operation for displaying a different menu UI based on the content according to an embodiment.

Referring to FIG. 32, the electronic apparatus 100 may display the first menu UI 10. The first menu UI 10 may include a UI indicating at least one function. The first menu UI 10 may include one UI if the first menu UI 10 includes one menu. The first menu UI 10 may include n UIs if the first menu UI 10 includes n menus.

The electronic apparatus 100 may determine the plurality of UIs to be included in the first menu UI 10. The electronic apparatus 100 may determine the plurality of UIs to be included in the first menu UI 10 based on the content provided (or displayed). The electronic apparatus 100 may identify a type of the content being provided (or displayed) and determine the plurality of UIs included in the first menu UI 10 based on the determined type of the content. The plurality of UIs may be changed based on the content provided.

The electronic apparatus 100 may store a UI mapping table for each content type that stores a UI corresponding to each of the plurality of content types. The electronic apparatus 100 may identify the content type to be displayed, and identify at least one UI corresponding to the content type based on the UI mapping table for each content type. The electronic apparatus 100 may display the first menu UI 10 including at least one UI.

Referring to exemplary diagram 3210 of FIG. 32, the electronic apparatus 100 may identify a plurality of UIs 3211, 3212, 3213, 3214, 3215, and 3216 corresponding to a move content type in case of providing the movie content type (first content type). The electronic apparatus 100 may display the first menu UI 10 including the plurality of UIs 3211, 3212, 3213, 3214, 3215, and 3216.

It is assumed that the first menu UI 10 of exemplary diagram 3210 is a basic UI. The electronic apparatus 100 may determine a plurality of UIs corresponding to the content type based on the basic UI.

Referring to exemplary diagram 3220 of FIG. 32, the electronic apparatus 100 may identify a plurality of UIs 3221, 3222, 3223, 3224, 3225, and 3226 corresponding to a game content type in case of providing the game content type (second content type). The electronic apparatus 100 may display the first menu UI 10 including the plurality of UIs 3221, 3222, 3223, 3224, 3225, and 3226. The UIs 3223, 3224, 3225, and 3226 may be identical to the UIs 3213, 3214, 3215, and 3216 of exemplary diagram 3210. The electronic apparatus 100 may not provide a function corresponding to the UI 3211 and a function corresponding to the UI 3212 in case of displaying the game content type. The electronic apparatus 100 may display the first menu UI 10 that does not include UI 3211 or 3212. The first menu UI 10 not including a specific UI may be provided in various ways.

For example, the electronic apparatus 100 may display the first menu UI 10 including the separates UI 3221 and 3222 that obscure the specific UIs 3211 and 3212.

For example, the electronic apparatus 100 may display the first menu UI 10 not including the specific UI 3211 or 3212. That is, the electronic apparatus 100 may display the four-direction first menu UI 10 from which the specific UIs 3211 and 3212 deleted instead of the six-direction first menu UI 10.

For example, the electronic apparatus 100 may display the first menu UI 10 by controlling the transparencies of only the specific UIs 3211 and 3212 (i.e., increasing their transparencies).

Referring to exemplary diagram 3230 of FIG. 32, the electronic apparatus 100 may identify a plurality of UIs 3231, 3232, 3233, 3234, 3235, and 3236 corresponding to the game content type in case of providing the game content type (second content type). The electronic apparatus 100 may display the first menu UI 10 including the plurality of UIs 3231, 3232, 3233, 3234, 3235, and 3236. The UIs 3233, 3234, 3235, and 3236 may be identical to the UIs 3213, 3214, 3215, and 3216 of exemplary diagram 3210.

The UIs 3231 and 3232 may be UIs related to a function provided only if the game content type is provided. The UI 3231 may be a UI related to a function for controlling the remote control device (e.g., joystick) connectable to the electronic apparatus 100. The UI 3232 may be a UI related to a function for controlling an audio output device (e.g., earphones or headphones) connectable to the electronic apparatus 100. The UI 3232 may be a UI related to a voice chat function between the users.

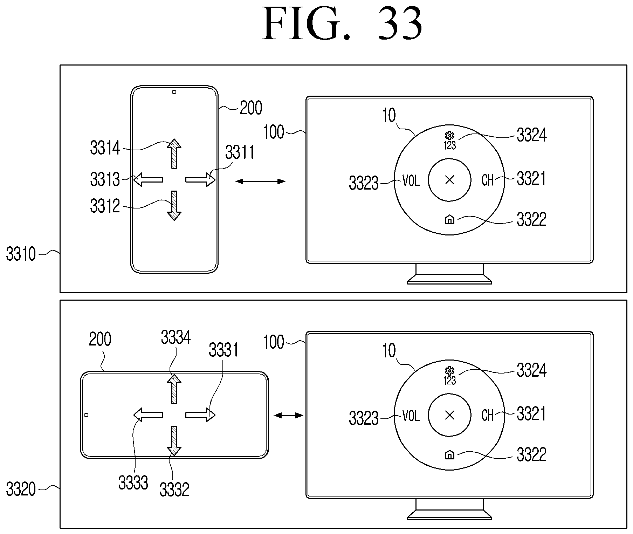

FIG. 33 is a diagram for explaining an operation for receiving the touch signal by considering a direction of the terminal device 200 according to an embodiment.

The terminal device 200 may acquire tilt angle (or rotation angle) information. The terminal device 200 may include a sensor for sensing the tilt angle. For example, the sensor may include at least one of a gyro sensor or an angular velocity sensor. The terminal device 200 may acquire sensing data through the sensor. The sensing data may include the tilt angle information. The tilt angle information may be information indicating a degree of tilt to which the terminal device 200 is rotated. The tilt angle information may be information indicating whether the terminal device 200 is currently in a portrait orientation or a landscape orientation.

The terminal device 200 may transmit the sensing data to the electronic apparatus 100. The electronic apparatus 100 may receive the sensing data from the terminal device 200. The electronic apparatus 100 may acquire the tilt angle information of the terminal device 200 based on the sensing data transmitted from the terminal device 200.

The electronic apparatus 100 may identify whether a display of the terminal device 200 is in the portrait orientation or the landscape orientation based on the tilt angle information of the terminal device 200. The tilt angle may indicate a tilt angle about a three-dimensional axis. The tilt angle about the three-dimensional axis may include roll, pitch, yaw, or the like.

The electronic apparatus 100 may identify the display orientation (current display orientation) of the terminal device 200 based on the tilt angle of the terminal device 200 about the three-dimensional axis, and perform a function corresponding to the first menu UI 10 by considering the identified display orientation. The electronic apparatus 100 may identify a display mode of the terminal device 200 based on the tilt angle information.

The display orientation may be described as the display mode. The display mode may include a landscape mode or a portrait mode. The electronic apparatus 100 may identify the display mode of the terminal device 200 based on the tilt angle information of the terminal device 200. The electronic apparatus 100 may perform the function corresponding to the first menu UI 10 based on the identified display mode.

In the above-described embodiment, the tilt angle information is acquired and the function corresponding to the first menu UI 10 is performed on the electronic apparatus 100. According to one or more embodiments, the operation performed on the electronic apparatus 100 may also be performed on the terminal device 200. The terminal device 200 may analyze the touch signal considering the tilt angle information, and transmit the analysis result to the electronic apparatus 100. The analysis result may include the control instruction for performing the specific function.

It is assumed that the first menu UI 10 is the four-direction UI shown in FIG. 9. The first menu UI 10 may include a plurality of UIs 3321, 3322, 3323, and 3324. A function corresponding to each of the plurality of UIs 3321, 3322, 3323, and 3324 may be performed based on the touch signal received from the terminal device 200.

Referring to exemplary diagram 3310 of FIG. 33, the terminal device 200 may be tilted to the portrait orientation (or into the portrait mode). The terminal device 200 may receive the drag touch signal while the electronic apparatus 100 displays the first menu UI 10. The electronic apparatus 100 may perform the function corresponding to the drag direction.

A rightward drag signal 3311 may correspond to the first UI 3321. The rightward drag signal 3311 may correspond to the first function indicated by the first UI 3321.

A downward drag signal 3312 may correspond to the second UI 3322. The downward drag signal 3312 may correspond to the second function indicated by the second UI 33**22**.

A leftward drag signal 3313 may correspond to the third UI 3323. The leftward drag signal 3313 may correspond to the third function indicated by the third UI 3323.

An upward drag signal 3314 may correspond to the fourth UI 3324. The upward drag signal 3314 may correspond to the fourth function indicated by the fourth UI 3324.

Referring to exemplary diagram 3320 of FIG. 33, the terminal device 200 may be tilted to the landscape orientation (or into the landscape mode). The terminal device 200 may receive the drag touch signal while the electronic apparatus 100 displays the first menu UI 10. The electronic apparatus 100 may perform the function corresponding to the drag direction.

A rightward drag signal 3331 may correspond to the first UI 3321. The rightward drag signal 3331 may correspond to the first function indicated by the first UI 3321.

A downward drag signal 3332 may correspond to the second UI 3322. The downward drag signal 3332 may correspond to the second function indicated by the second UI 3322.

A leftward drag signal 3333 may correspond to the third UI 3323. The leftward drag signal 3333 may correspond to the third function indicated by the third UI 3323.

An upward drag signal 3334 may correspond to the fourth UI 3324. The upward drag signal 3332 may correspond to the fourth function indicated by the fourth UI 3324.

The drag signal 3311 of exemplary diagram 3310 and the drag signal 3334 of exemplary diagram 3320 may have the same absolute coordinate translation value. However, the drag direction accepted by the electronic apparatus 100 may differ based on the display orientation (or the display mode) of the electronic apparatus 100. In the portrait mode, the electronic apparatus 100 may perform the first function corresponding to the first UI 3321 if the drag signals 3311 and 3334 having the same coordinate translation value are received. In the landscape mode, the electronic apparatus 100 may perform the fourth function corresponding to the fourth UI 3324 if the drag signals 3311 and 3334 having the same coordinate translation value are received.

FIG. 34 is a diagram for explaining an operation for displaying a seventh menu UI 11 corresponding to the first menu UI also on the terminal device 200 according to an embodiment.

Operations S3405, S3410, S3411, S3415, S3420, S3425, and S3430 of FIG. 34 may correspond to operations S1405, S1410, S1411, S1415, S1420, S1425, and S1430 of FIG. 14. Their redundant descriptions are omitted.

The seventh menu UI 11 may be a UI displayed on the terminal device 200. The seventh menu UI 11 may be a UI corresponding to the first menu UI 10 displayed on the electronic apparatus 100. The seventh menu UI 11 displayed on the terminal device 200 may allow the user to input a user command for controlling the electronic apparatus 100 into the terminal device 200.

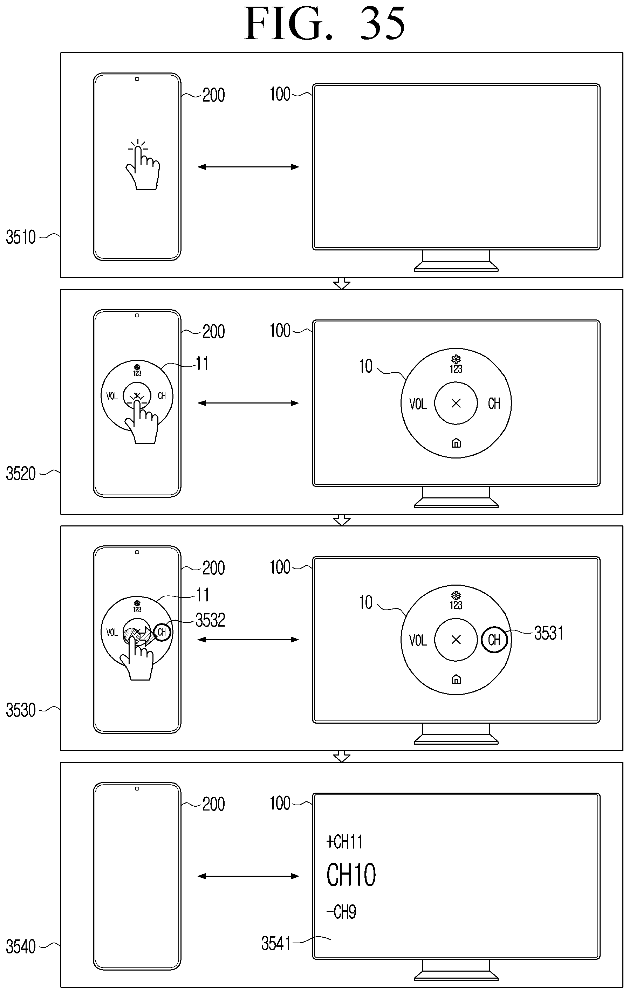

The first menu UI 10 and the seventh menu UI 11 may have the same appearance. The first menu UI 10 and the seventh menu UI 11 may have different sizes. The reason is that screen regions, displayed on the electronic apparatus 100 and the terminal device 200, are different from each other. The seventh menu UI 11 is described in exemplary diagrams 3520 and 3530 of FIG. 35. The seventh menu UI 11 may be described as a sub UI, a target UI, an auxiliary UI, a UI displayed on the terminal device 200, or the like. For example, the seventh menu UI 11 itself may be described as the first menu UI.

The electronic apparatus 100 may transmit the control instruction for displaying the seventh menu UI 11 to the terminal device 200 (S3416) if the first touch signal is identified as including the first touch type (S3411-Y). The electronic apparatus 100 may generate the control instruction for displaying the seventh menu UI 11 on the terminal device 200 and transmit the generated control instruction to the terminal device 200.

The terminal device 200 may receive the control instruction for displaying the seventh menu UI 11 from the electronic apparatus 100. The terminal device 200 may display the seventh menu UI 11 on the display of the terminal device 200 based on the received instruction (S3417). The user may recognize the touch method by using the seventh menu UI 11 displayed on the terminal device 200.

FIG. 34 describes an operation of the electronic apparatus 100 transmitting the control instruction for displaying the seventh menu UI 11 to the terminal device 200. According to an embodiment, the electronic apparatus 100 may not transmit the control instruction for displaying the seventh menu UI 11 to the terminal device 200. The terminal device 200 may analyze the first touch signal to identify whether the first touch signal includes the first touch type if the first touch signal is received. The terminal device 200 may transmit an analysis result of the first touch signal (indicating that the first touch signal includes the first touch type) to the electronic apparatus 100. The terminal device 200 may transmit the control instruction for displaying the first menu UI 10 to the electronic apparatus 100 based on the analysis result of the first touch signal. The terminal device 200 may display the seventh menu UI 11 before or after the operation of transmitting the analysis result to the electronic apparatus 100. The terminal device 200 may display the seventh menu UI 11 based on the analysis result of the first touch signal. The terminal device 200 may display the seventh menu UI 11 if an event in which the first touch signal includes the first touch type is identified.

FIG. 34 describes that the seventh menu UI 11 corresponding to the first menu UI 10 is displayed on the terminal device 200. However, an operation for displaying a new type of UI (e.g., eighth menu UI) corresponding to the second menu UI 20 may be applied to the description of FIG. 34. In this regard, the operations of FIG. 19 may be used.

According to an embodiment, the terminal device 200 may receive the third touch signal. The terminal device 200 may transmit the third touch signal to the electronic apparatus 100. The electronic apparatus 100 may receive the third touch signal. The electronic apparatus 100 may identify whether the third touch signal includes the second touch type. The electronic apparatus 100 may display the second menu UI 20 if the third touch signal includes the second touch type. The electronic apparatus 100 may generate the control instruction for displaying the eighth menu UI on the terminal device 200. The electronic apparatus 100 may transmit the generated control instruction to the terminal device 200. The terminal device 200 may receive the control instruction. The terminal device 200 may display the eighth menu UI on the display of the terminal device 200 based on the received control instruction. The terminal device 200 may receive the fourth touch signal while the eighth menu UI is displayed. The terminal device 200 may transmit the fourth touch signal to the electronic apparatus 100. The electronic apparatus 100 may receive the fourth touch signal from the terminal device 200. The electronic apparatus 100 may perform the function corresponding to the fourth touch signal.

The eighth menu UI may be a UI corresponding to the second menu UI 20 displayed on the electronic apparatus 100. The user may input the user command for controlling the electronic apparatus 100 into the terminal device 200 through the eighth menu UI displayed on the terminal device 200.

According to an embodiment, the electronic apparatus 100 may not transmit the control instruction for displaying the eighth menu UI to the terminal device 200. The terminal device 200 may analyze the third touch signal to identify whether the third touch signal includes the second touch type if the third touch signal is received. The terminal device 200 may transmit an analysis result of the third touch signal (indicating that the third touch signal includes the second touch type) to the electronic apparatus 100. The terminal device 200 may transmit the control instruction for displaying the second menu UI 20 to the electronic apparatus 100 based on the analysis result of the third touch signal. The terminal device 200 may display the eighth menu UI 11 before or after the operation of transmitting the analysis result to the electronic apparatus 100. The terminal device 200 may display the eighth menu UI 11 based on the analysis result of the third touch signal. The terminal device 200 may display the eighth menu UI 11 if an event in which the third touch signal includes the second touch type is identified.

FIG. 35 is a diagram for explaining an operation for displaying the seventh menu UI corresponding to the first menu UI 10 also on the terminal device 200 according to an embodiment.

Referring to exemplary diagram 3510 of FIG. 35, the terminal device 200 may receive a first tap signal. The terminal device 200 may transmit the first tap signal to the electronic apparatus 100. The electronic apparatus 100 may perform the selection operation or may not perform the selection operation based on the first tap signal.

Referring to exemplary diagram 3520 of FIG. 35, the terminal device 200 may receive a second tap signal within the threshold time from a time point at which the tap signal of exemplary diagram 3510 is received. The terminal device 200 may transmit the second tap signal to the electronic apparatus 100. The electronic apparatus 100 may identify that the double tap signal is received if the second tap signal is received within the threshold time from a time point at which the first tap signal is received. The terminal device 200 may receive a hold signal after receiving the second tap signal. The terminal device 200 may transmit the hold signal to the electronic apparatus 100.

The electronic apparatus 100 may determine that the first touch type is identified if the double tap signal and the hold signal are received. The electronic apparatus 100 may identify that the first event occurs if the first touch type is identified. The electronic apparatus 100 may display the first menu UI 10 on the display 140 of the electronic apparatus 100 if the first event is identified. The electronic apparatus 100 may transmit the first control instruction for displaying the seventh menu UI 11 to the terminal device 200 if the first event is identified. The terminal device 200 may receive the first control instruction from the electronic apparatus 100. The terminal device 200 may display the seventh menu UI 11 on the display of the terminal device 200 based on the first control instruction.

Referring to exemplary diagram 3530 of FIG. 35, the terminal device 200 may receive the drag signal as the user input while the seventh menu UI 11 is displayed on the display of the terminal device 200. The terminal device 200 may transmit the drag signal to the electronic apparatus 100. The electronic apparatus 100 may identify the drag direction based on the drag signal.

The electronic apparatus 100 may perform a function of the UI corresponding to the drag direction among the plurality of UIs included in the seventh menu UI 11. The electronic apparatus 100 may display a guide UI 3531 indicating the UI corresponding to the drag direction if the drag direction is identified. The electronic apparatus 100 may generate the second control instruction for displaying a guide UI 3532 indicating the UI corresponding to the drag direction on the terminal device 200. The electronic apparatus 100 may transmit the second control instruction to the terminal device 200. The terminal device 200 may display the guide UI 3532 on the display of the terminal device 200 based on the second control instruction. The guide UI 3531 or 3532 may be described as an activation UI.

Referring to exemplary diagram 3540 of FIG. 35, the terminal device 200 may receive the release signal after the drag signal. The release signal may indicate a signal that the user lifts off the touch from the terminal device 200. The terminal device 200 may not display the seventh menu UI 11 on the display of the terminal device 200 if the release signal is received. The terminal device 200 may transmit the release signal to the electronic apparatus 100. The electronic apparatus 100 may perform the function corresponding to the drag direction shown in exemplary diagram 3530 if the release signal is received. The electronic apparatus 100 may provide a screen 3541 related to the function performed by performing the function corresponding to the drag direction.

FIG. 36 is a diagram for explaining a menu UI having a different form from the first menu UI 10 according to an embodiment.

Referring to exemplary diagram 3610 of FIG. 36, the electronic apparatus 100 may display the third menu UI 30 instead of the first menu UI 10. A form of the first menu UI 10 may be changed based on the user setting. It is assumed that the user inputs a setting for displaying the third menu UI 30. The third menu UI 30 may be horizontally arranged UIs. A plurality of UIs 3611, 3612, 3613, 3614, 3615, and 3616 may be displayed in a predetermined order in a horizontal direction.

The terminal device 200 may receive the drag signal. The drag direction of the drag signal may be left or right. The terminal device 200 may transmit the drag signal to the electronic apparatus 100. The electronic apparatus 100 may identify the drag direction of the drag signal and control a position of an activation UI 3601 based on the identified drag direction. The activation UI 3601 may be a UI guiding an item currently selected by the user touch.

The terminal device 200 may receive the release signal. The terminal device 200 may transmit the release signal to the electronic apparatus 100. The electronic apparatus 100 may identify a current position of the activation UI 3601 and perform a function corresponding to the position of the activation UI 3601 if the release signal is received. The function corresponding to the position of the activation UI 3601 may indicate a function corresponding to the UI 3613 surrounded by the activation UI 3601.

Referring to exemplary diagram 3620 of FIG. 36, the electronic apparatus 100 may display the fourth menu UI 40 instead of the first menu UI 10. The form of the first menu UI 10 may be changed based on the user setting. It is assumed that the user inputs a setting for displaying the fourth menu UI 40. The fourth menu UI 40 may be a triangular UI. A plurality of UIs 3621, 3622, 3623, 3624, 3625, and 3626 may be displayed in a predetermined order on a virtual line in a triangular shape.

The terminal device 200 may receive the drag signal. The drag direction of the drag signal may be a direction along the virtual triangular line. The terminal device 200 may transmit the drag signal to the electronic apparatus 100. The electronic apparatus 100 may identify the drag direction of the drag signal and control the position of the activation UI 3601 based on the identified drag direction. A description related to the activation UI 3601 may correspond to the description provided in exemplary diagram 3610.

FIG. 37 is a diagram for explaining a menu UI having a different form from the second menu UI 20 according to an embodiment.

Referring to exemplary diagram 3710 of FIG. 37, the electronic apparatus 100 may display the fifth menu UI 50 instead of the second menu UI 20. A form of the second menu UI 20 may be changed based on the user setting. It is assumed that the user inputs a setting for displaying the fifth menu UI 50. The fifth menu UI 50 may be vertically arranged UIs. A plurality of UIs 3711, 3712, 3713, 3714, 3715, and 3716 may be displayed in a predetermined order in a vertical direction.

The terminal device 200 may receive the drag signal. The drag direction of the drag signal may be upward or downward. The terminal device 200 may transmit the drag signal to the electronic apparatus 100. The electronic apparatus 100 may identify the drag direction of the drag signal and control a position of an activation UI 3701 based on the identified drag direction. The activation UI 3701 may be a UI guiding an item currently selected by the user touch.

The terminal device 200 may receive the release signal. The terminal device 200 may transmit the release signal to the electronic apparatus 100. The electronic apparatus 100 may identify a current position of the activation UI 3701 and perform a function corresponding to the position of the activation UI 3701 if the release signal is received. The function corresponding to the position of the activation UI 3701 may indicate a function corresponding to the UI 3713 surrounded by the activation UI 3701.

Referring to exemplary diagram 3720 of FIG. 37, the electronic apparatus 100 may display sixth menu UI 60 instead of the second menu UI 20. A form of the second menu UI 20 may be changed based on the user setting. It is assumed that the user inputs a setting for displaying the sixth menu UI 60. The sixth menu UI 60 may be a triangular UI. A plurality of UIs 3721, 3722, 3723, 3724, 3725, and 3726 may be displayed in a predetermined order in a virtual line in the triangular shape.

The terminal device 200 may receive the drag signal. The drag direction of the drag signal may be a direction along a virtual triangular line. The terminal device 200 may transmit the drag signal to the electronic apparatus 100. The electronic apparatus 100 may identify the drag direction of the drag signal and control the position of the activation UI 3701 based on the identified drag direction. A description related to the activation UI 3701 may correspond to the description provided in exemplary diagram 3710.

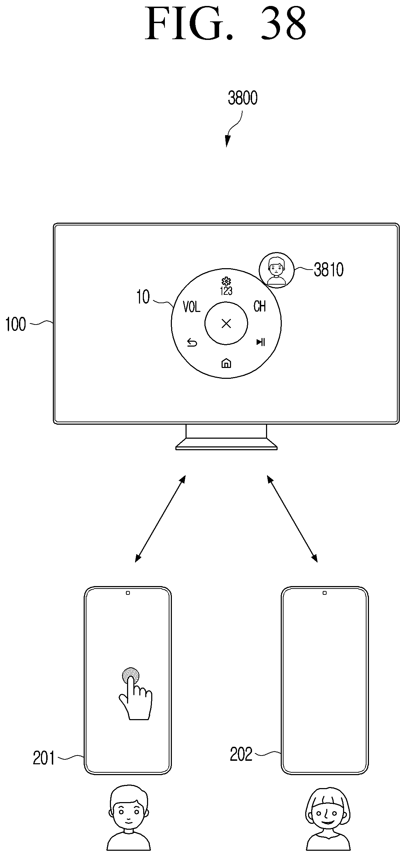

FIG. 38 is a diagram for explaining an operation for displaying the first menu UI 10 in a situation where the plurality of users are connected according to an embodiment.

Referring to exemplary diagram 3800 of FIG. 38, the electronic apparatus 100 may be connected to a plurality of terminal devices 201 and 202. The plurality of terminal devices 201 and 202 may each have different users. The plurality of terminal devices 201 and 202 may each have different user accounts. The electronic apparatus 100 may display an account UI 3810 indicating a subject of the touch signal if the plurality of terminal devices 201 and 202 are connected to the electronic apparatus 100. The account UI 3810 may be a UI indicating the user account. The account UI 3810 may include at least one of a name, an identifier (ID), a nickname, a basic image, a profile image, or a thumbnail image.

For example, the terminal device 200 may transmit the first touch signal to the electronic apparatus 100 if the first touch signal is received from the terminal device 201. The first touch signal may include identification information of the terminal device 201 that receives the touch signal or account information of the terminal device 201. The electronic apparatus 100 may acquire the account information from the first touch signal and display the account UI 3810 corresponding to the account information on the display 140.

The electronic apparatus 100 may be connected to the external server to acquire the account information of the terminal devices 201 and 202. The electronic apparatus 100 may request the account information corresponding to the terminal devices 201 and 202 by transmitting the identification information of the terminal devices 201 and 202 or identification information of the user of the terminal devices 201 and 202 to the external server.

FIG. 38 describes two terminal devices. However, the electronic apparatus 100 may acquire the account information and display the account UI 3810 even while only one terminal device is connected thereto.

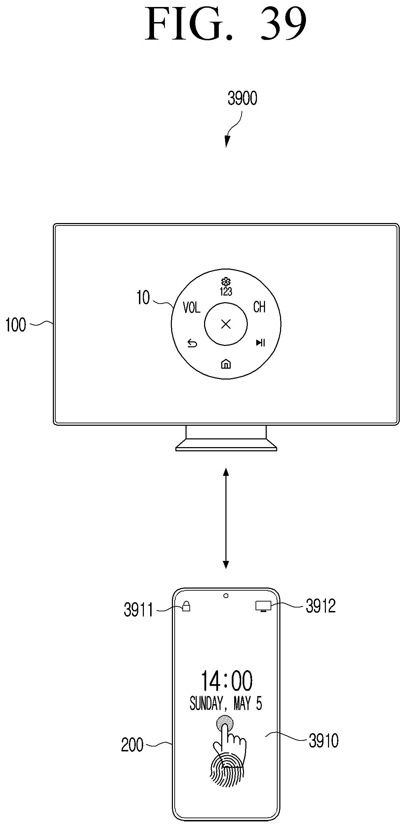

FIG. 39 is a diagram for explaining an operation for receiving the touch input on a lock screen of the terminal device 200 according to an embodiment.

Referring to exemplary diagram 3900 of FIG. 39, a lock screen 3910 may include a lock UI 3911 indicating that the terminal device 200 is currently in a lock mode.

The terminal device 200 may execute the touch recognition mode while displaying the lock screen 3910. The terminal device 200 may display a connection UI 3912 indicating that the touch recognition mode is performed if the touch recognition mode is executed. The touch recognition mode may be executed by a predetermined communication connection application.

The terminal device 200 may receive the touch signal while the touch recognition mode is performed. The terminal device 200 may adjust the transparency of the lock screen 3910 to a threshold value or more while the touch signal is received in the touch recognition mode. The lock screen 3910 may not be displayed on the display of the terminal device 200 if the transparency threshold value is set to the maximum.

The terminal device 200 may receive the first touch signal while the lock screen 3910 is displayed on the terminal device 200 and the terminal device 200 is executed in the touch recognition mode. The terminal device 200 may transmit the first touch signal to the electronic apparatus 100. The electronic apparatus 100 may display the first menu UI 10 on the display 140 based on the first touch signal.

The user may want to stop (or end) the touch recognition mode and unlock the terminal device 200, which is its original function. The terminal device 200 may end the touch recognition mode if the user touch signal is input through the lock UI 3911. The terminal device 200 may not display the connection UI 3912 if the touch recognition mode ends. The terminal device 200 may recognize the touch signal as a touch signal related to unlocking if the terminal device 200 receives the touch signal while the touch recognition mode ends.

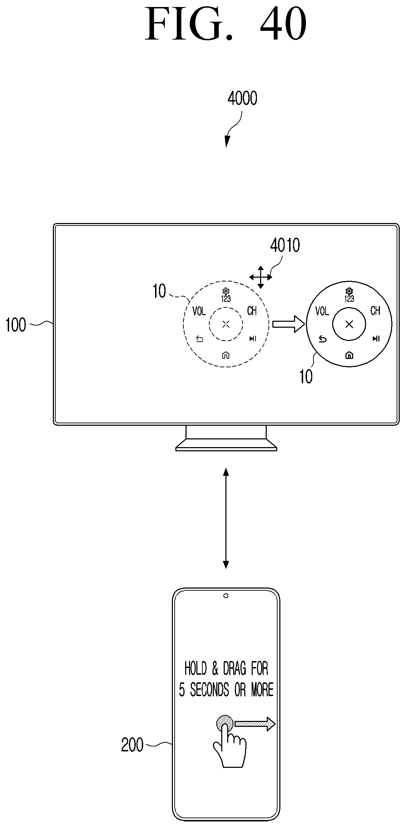

FIG. 40 is a diagram for explaining an operation for moving the first menu UI 10 according to an embodiment.

Referring to exemplary diagram 4000 of FIG. 40, the terminal device 200 may receive the touch signal corresponding to a predetermined fifth touch type. The fifth touch type may indicate the touch signal corresponding to the first touch type (e.g., double tap and hold) whose hold time is the threshold time or more.

The terminal device 200 may transmit the touch signal to the electronic apparatus 100. The electronic apparatus 100 may execute a UI position change mode for moving the position of the first menu UI 10 if the hold time is the threshold time or more.

The electronic apparatus 100 may execute the UI position change mode if the touch signal corresponding to the fifth touch type is identified. The electronic apparatus 100 may display a guide UI 4010 notifying that the UI position change mode is being performed on the display 140. The user may recognize that the position of the first menu UI 10 may be changed through the guide UI 4010.

The terminal device 200 may receive the drag touch signal after receiving the touch signal corresponding to the fifth touch type. The terminal device 200 may transmit the drag signal to the electronic apparatus 100. The electronic apparatus 100 may change the position of the first menu UI 10 based on the drag signal. The electronic apparatus 100 may move the first menu UI 10.

The terminal device 200 may receive the release signal after receiving the drag signal. The terminal device 200 may transmit the release signal to the electronic apparatus 100. The electronic apparatus 100 may end the UI position change mode if the release signal is received. The electronic apparatus 100 may store the moved position of the first menu UI 10 in the memory 110. The electronic apparatus 100 may display the first menu UI 10 at the stored position if the first event is identified later.

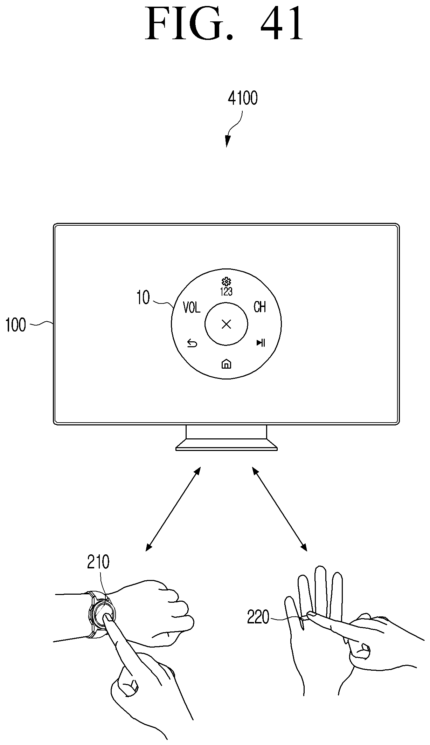

FIG. 41 is a diagram for explaining an operation for receiving the touch input through the various terminal devices 210 and 220 according to an embodiment.

Referring to exemplary diagram 4100 of FIG. 41, the electronic apparatus 100 may be connected to the terminal device 210. The terminal device 210 may be a smart watch. The terminal device 210 may include a touch display. The terminal device 210 may receive the user touch signal through the touch display. The terminal device 210 may transmit the user touch signal to the electronic apparatus 100. The electronic apparatus 100 may display the first menu UI 10 based on the user touch signal.

The electronic apparatus 100 may be connected to the terminal device 220. The terminal device 220 may be a smart ring. The terminal device 220 may include a touch sensing region. The terminal device 220 may receive the user touch signal through the touch sensing region. The terminal device 220 may transmit the user touch signal to the electronic apparatus 100. The electronic apparatus 100 may display the first menu UI 10 based on the user touch signal.

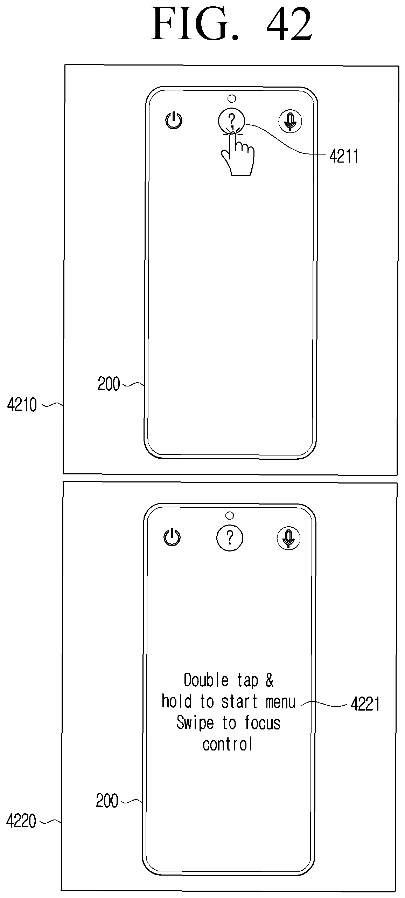

FIG. 42 is a diagram for explaining an operation for guiding a touch method for controlling the electronic apparatus 100 according to an embodiment.

Referring to exemplary diagram 4210 of FIG. 42, the terminal device 200 may display a guide UI 4211 for providing information related to the quick menu function on the display of the terminal device 200. The terminal device 200 may receive the user input (touch signal) for selecting the guide UI 4211.

Referring to exemplary diagram 4220 of FIG. 42, the terminal device 200 may display guide information 4221 based on the user input for selecting the guide UI 4211. The guide information 4221 may include information for describing an action (or event) that the user needs to take to use the quick menu function. The guide information 4221 may include at least one of the text information or the image information for describing a specific action.

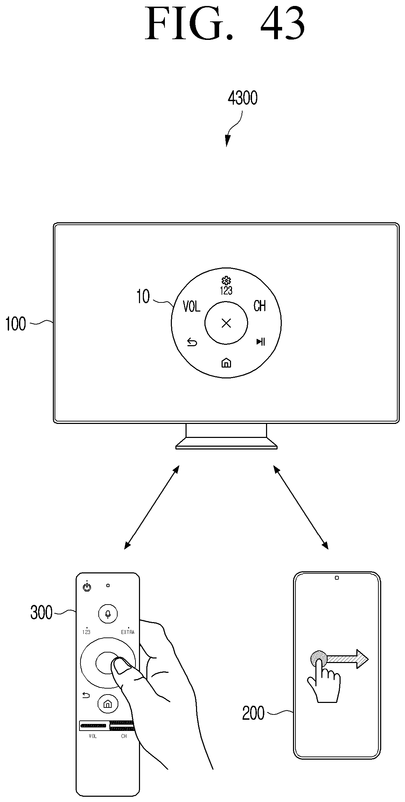

FIG. 43 is a diagram for explaining a situation where a signal of a remote control device 300 is input while the electronic apparatus 100 is controlled by the terminal device 200 according to an embodiment.

Referring to exemplary diagram 4300 of FIG. 43, the electronic apparatus 100 may be connected to the terminal device 200 and the remote control device 300 for the communication. It is assumed that the electronic apparatus 100 displays the first menu UI 10 based on the touch signal received from the terminal device 200. The electronic apparatus 100 may receive a control signal from the remote control device 300 while the first menu UI 10 is displayed on the electronic apparatus 100. The control signal received from the remote control device 300 may interfere with the touch signal of the terminal device 200.

The electronic apparatus 100 may process one of the two signals with priority by granting priority to either the touch signal of the terminal device 200 or the control signal of the remote control device 300.

According to an embodiment, the electronic apparatus 100 may grant the priority to the remote control device 300. The electronic apparatus 100 may process the control signal of the remote control device 300 with priority if the control signal is received from the remote control device 300 while displaying the first menu UI 10 based on the touch signal of the terminal device 200. The electronic apparatus 100 may control the transparency of the displayed first menu UI 10 to be the threshold value or more. The threshold value may be changed based on the user setting. The first menu UI 10 may not be displayed on the electronic apparatus 100 if the threshold value is the maximum.

According to an embodiment, the electronic apparatus 100 may grant the priority to the terminal device 200. The electronic apparatus 100 may process the touch signal of the terminal device 200 with priority if the control signal is received from the remote control device 300 while displaying the first menu UI 10 based on the touch signal of the terminal device 200.

FIG. 44 is a diagram for explaining an operation for executing the touch input mode of the terminal device 200 if the terminal device 200 approaches the electronic apparatus 100 according to an embodiment.

Referring to exemplary diagram 4400 of FIG. 44, the electronic apparatus 100 and the terminal device 200 may be automatically connected to each other for the communication if the distance between the electronic apparatus 100 and the terminal device 200 is within the threshold distance. The electronic apparatus 100 may determine whether the terminal device 200 approaches by using a broadcasting method. The electronic apparatus 100 may determine the distance between the terminal device 200 and the electronic apparatus 100. The electronic apparatus 100 may perform the communication connection with the terminal device 200 if the distance between the terminal device 200 and the electronic apparatus 100 is within the threshold distance.

The electronic apparatus 100 may generate the control instruction causing the terminal device 200 to perform a touch control mode if the distance between the terminal device 200 and the electronic apparatus 100 is within the threshold distance. The electronic apparatus 100 may transmit the control instruction to the terminal device 200. The terminal device 200 may perform the touch control mode by receiving the control instruction. The touch signal received from the terminal device 200 may be transmitted to the electronic apparatus 100 if the touch control mode is performed. The electronic apparatus 100 may perform the specific function of the electronic apparatus 100 based on the touch signal.

The electronic apparatus 100 may display a guide UI 4410 related to the touch control mode if the control instruction that causes the terminal device 200 to perform the touch control mode is generated. The guide UI 4410 may include at least one of the identification information (name, device model name or the like) indicating the connected terminal device 200, the text information related to the touch control mode, or the image information related to the touch control mode.

According to an embodiment, the touch recognition mode of the terminal device 200 connected to the electronic apparatus 100 may be executed immediately if the electronic apparatus 100 is powered on. The electronic apparatus 100 may generate the control instruction for performing the touch recognition mode based on a power-on event. The electronic apparatus 100 may transmit the control instruction to the terminal device 200. The terminal device 200 may perform the touch control mode based on the received control instruction. The electronic apparatus 100 and the terminal device 200 may be connected to each other for the communication.

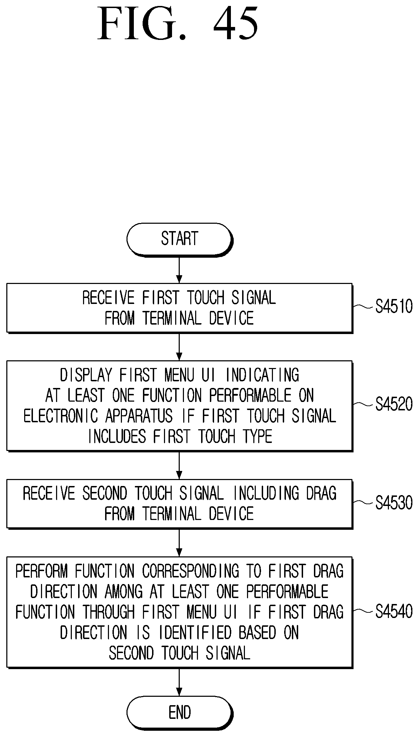

FIG. 45 is a diagram for explaining a control method of an electronic apparatus 100 according to an embodiment.

Referring to FIG. 45, the control method of an electronic apparatus 100 may include: receiving the first touch signal from the terminal device 200 (S4510); displaying the first menu UI indicating at least one function performable on the electronic apparatus 100 if the first touch signal includes the first touch type (S4520); receiving the second touch signal including the drag from the terminal device 200 (S4530); and performing the function corresponding to the first drag direction among at least one performable function through the first menu UI if the first drag direction is identified based on the second touch signal (S4540).

The first touch type may include the double tap and hold or long press.

The first menu UI may include a UI indicating at least one function, the electronic apparatus 100 may store the mapping table that maps at least one function to the placement direction of the UI indicating at least one function, and in the performing of the function, the placement direction that matches the first drag direction may be identified based on the mapping table if the first drag direction is identified, and the function corresponding to the identified placement direction may be performed.

The first menu UI may include the first UI indicating the first function and the second UI indicating the second function, and the mapping table may include the first mapping information that maps the first function to the first direction indicating the direction in which the first UI is placed based on the center point of the first menu UI, and the second mapping information that maps the second function to the second direction indicating the direction in which the second UI is placed based on the center point of the first menu UI.

In the performing of the function (S4540), a direction that matches the first drag direction may be identified among the first direction and the second direction included in the mapping table if the first drag direction is identified, and the first function corresponding to the first direction may be performed if the first drag direction matches the first direction.

The electronic apparatus 100 may store the second touch type, and the control method may include receiving the third touch signal from the terminal device 200, and displaying the second menu UI indicating at least one function performable on the electronic apparatus 100 if the third touch signal includes the second touch type, the second menu UI being the UI having a different appearance from the first menu UI.

The second touch type may include the edge swipe and hold, and the edge swipe may be the swipe input that moves from the edge region of the terminal device 200 to its central region among all its regions.

The control method may include receiving the fourth touch signal including the drag from the terminal device 200, and performing the function corresponding to the second drag direction among at least one performable function through the second menu UI if the second drag direction is identified based on the fourth touch signal.

The electronic apparatus 100 may store the third touch type including the double tap, hold and drag, and the control method may include receiving the fifth touch signal from the terminal device 200, identifying the third drag direction based on the fifth touch signal if the fifth touch signal includes the third touch type, and performing the function corresponding to the third drag direction without displaying the first menu UI.

The control method may include generating the control instruction for displaying the background screen of a color indicating the predetermined mode if the function corresponding to the first drag direction corresponds to the predetermined mode, transmitting the control instruction to the terminal device 200, receiving the sixth touch signal input from the terminal device 200 while the background screen is displayed, and performing the function corresponding to the sixth touch signal.

The methods according to the various embodiments of the present disclosure described above may be implemented in the form of an application capable of being installed on a conventional electronic apparatus.

The methods according to the various embodiments of the present disclosure described above may be implemented only by software upgrade or hardware upgrade of the conventional electronic apparatus.

The various embodiments of the present disclosure described above may be performed through an embedded server included in the electronic apparatus, or an external server of at least one of the electronic apparatus and the display device.

According to an embodiment of the present disclosure, the various embodiments described above may be implemented in software including an instruction stored on a machine-readable storage medium (for example, a computer-readable storage medium). A machine may be a device that invokes the stored instruction from a storage medium, may be operated based on the invoked instruction, and may include the electronic apparatus in the disclosed embodiments. If the instruction is executed by the processor, the processor may directly perform a function corresponding to the instruction or another component may perform the function corresponding to the instruction under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

According to an embodiment of the present disclosure, the methods according to the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)) or online through an application store (for example, PlayStore^{™}). In case of the online distribution, at least portions of the computer program product may be at least temporarily stored on the storage medium such as a memory of a manufacturer server, a server of an application store, or a relay server or be temporarily generated.

Each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although certain embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
memory storing one or more instructions and a first touch type;
a communication interface;
a display; and
at least one processor configured to execute the one or more instructions,
wherein the one or more instructions, when executed by the at least one processor, cause the electronic apparatus to:
receive a first touch signal from a terminal device through the communication interface,
based on the first touch signal comprising the first touch type, control the display to display a first menu user interface (UI) indicating at least one function performable on the electronic apparatus,
receive a second touch signal comprising a drag from the terminal device through the communication interface, and
based on a first drag direction being identified based on the second touch signal, perform a function corresponding to the first drag direction among the at least one function through the first menu UI.

2. The electronic apparatus of claim 1, wherein the first touch type comprises a double tap and hold or a long press,
wherein the long press is a touch that exceeds a predetermined duration.

3. The electronic apparatus of claim 1,
wherein the first menu UI comprises a UI indicating the at least one function,
wherein the memory stores a mapping table that maps the at least one function to a placement direction of the UI indicating the at least one function, and
wherein the one or more instructions, when executed by the at least one processor, cause the electronic apparatus to:
based on identifying the first drag direction, identify the placement direction that matches the first drag direction based on the mapping table, and
perform a function corresponding to the identified placement direction.

4. The electronic apparatus of claim 3,
wherein the first menu UI comprises a first UI indicating a first function and a second UI indicating a second function, and
wherein the mapping table comprises:
first mapping information that maps the first function to a first direction corresponding to a direction in which the first UI is placed relative to a center point of the first menu UI, and
second mapping information that maps the second function to a second direction corresponding to a direction in which the second UI is placed relative to the center point of the first menu UI.

5. The electronic apparatus of claim 4, wherein the one or more instructions, when executed by the at least one processor, cause the electronic apparatus to:
based on identifying the first drag direction, identify a direction that matches the first drag direction among the first direction and the second direction, and
based on the first drag direction matching the first direction, perform the first function corresponding to the first direction.

6. The electronic apparatus of claim 1,
wherein the memory stores a second touch type,
wherein the one or more instructions, when executed by the at least one processor, cause the electronic apparatus to:
receive a third touch signal from the terminal device through the communication interface, and
based on the third touch signal comprising the second touch type, control the display to display a second menu UI indicating the at least one function, and
wherein the second menu UI has a different appearance from the first menu UI.

7. The electronic apparatus of claim 6,
wherein the second touch type comprises an edge swipe and hold, and
wherein the edge swipe is a swipe input that moves from an edge region of the terminal device to its central region among all its regions.

8. The electronic apparatus of claim 7, wherein the one or more instructions, when executed by the at least one processor, cause the electronic apparatus to:
receive a fourth touch signal comprising a drag from the terminal device through the communication interface, and
based on the identifying a second drag direction based on the fourth touch signal, perform a function corresponding to the second drag direction among the at least one function which is performable through the second menu UI.

9. The electronic apparatus of claim 1,
wherein the memory stores a third touch type comprising a double tap, hold and drag, and
wherein the one or more instructions, when executed by the at least one processor, cause the electronic apparatus to:
receive a fifth touch signal from the terminal device through the communication interface,
based on the fifth touch signal comprising the third touch type, identify a third drag direction based on the fifth touch signal, and
perform a function corresponding to the third drag direction without displaying the first menu UI.

10. The electronic apparatus of claim 1, wherein the one or more instructions, when executed by the at least one processor, cause the electronic apparatus to:
based on the function corresponding to the first drag direction corresponds to a predetermined mode, generate a control instruction for displaying a background screen of a color indicating the predetermined mode,
transmit the control instruction to the terminal device through the communication interface,
receive a sixth touch signal input from the terminal device through the communication interface while the background screen is displayed, and
perform a function corresponding to the sixth touch signal.

11. A method of controlling an electronic apparatus, the method comprising:
receiving a first touch signal from a terminal device;
based on the first touch signal comprising a first touch type, displaying a first menu user interface (UI) indicating at least one function performable on the electronic apparatus;
receiving a second touch signal comprising a drag from the terminal device; and
based on a first drag direction being identified based on the second touch signal, performing a function corresponding to the first drag direction among the at least one function through the first menu UI.

12. The method of claim 11, wherein the first touch type comprises a double tap and hold or a long press,
wherein the long press is a touch that exceeds a predetermined duration.

13. The method of claim 11,
wherein the first menu UI comprises a UI indicating the at least one function,
wherein a mapping table that maps the at least one function to a placement direction of the UI indicating the at least one function is stored in a memory of the electronic apparatus, and
wherein the performing the function comprises:
based on the first drag direction being identified, identifying the placement direction that matches the first drag direction based on the mapping table, and
performing a function corresponding to the identified placement direction.

14. The method of claim 13,
wherein the first menu UI comprises a first UI indicating a first function and a second UI indicating a second function, and
wherein the mapping table comprises:
first mapping information that maps the first function to a first direction corresponding to a direction in which the first UI is placed relative to a center point of the first menu UI, and
second mapping information that maps the second function to a second direction corresponding to a direction in which the second UI is placed relative to the center point of the first menu UI.

15. The method of claim 14, wherein the performing the function further comprises:
based on identifying the first drag direction, identifying a direction that matches the first drag direction is identified among the first direction and the second direction, and
based on the first drag direction matching the first direction, performing the first function corresponding to the first direction.
